(19) Europäisches Patentamt
European Patent Office
Office européen des brevets

(11) **EP 3 789 666 B1**

(12) **EUROPÄISCHE PATENTSCHRIFT**

(45) Veröffentlichungstag und Bekanntmachung des Hinweises auf die Patenterteilung:
**29.04.2026 Patentblatt 2026/18**

(21) Anmeldenummer: **20193408.0**

(22) Anmeldetag: **28.08.2020**

(51) Internationale Patentklassifikation (IPC):
**F21V 8/00** (2006.01)  **G02B 6/06** (2006.01)

(52) Gemeinsame Patentklassifikation (CPC):
**G02B 6/001; G02B 6/06**

(54) **SEITENEMITTIERENDER LICHTLEITER UND VERFAHREN ZU DESSEN HERSTELLUNG**

SIDE-EMITTING LIGHT GUIDE AND METHOD FOR PRODUCING THE SAME

CONDUCTEUR DE LUMIÈRE À ÉMISSION LATÉRALE ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2019 DE 102019123694**

(43) Veröffentlichungstag der Anmeldung:
**10.03.2021 Patentblatt 2021/10**

(73) Patentinhaber: **SCHOTT AG**
**55122 Mainz (DE)**

(72) Erfinder:
• **Kappel, Markus**
**55595 Roxheim (DE)**
• **Hoppe, Bernd**
**55218 Ingelheim (DE)**
• **Russert, Hubertus**
**55270 Jugenheim (DE)**
• **Willmes, Lothar**
**65375 Oestrich-Winkel (DE)**

(74) Vertreter: **Blumbach · Zinngrebe Patentanwälte PartG mbB**
**Alexandrastraße 5**
**65187 Wiesbaden (DE)**

(56) Entgegenhaltungen:
EP-A1- 3 086 027   EP-A1- 3 096 077
DE-A1- 102009 039 556   US-A- 5 695 583
US-A1- 2007 189 031   US-A1- 2014 218 958
US-A1- 2015 131 955

**Beschreibung**

Die Erfindung betrifft allgemein das technische Gebiet lichtemittierender Elemente. Im Speziellen betrifft die Erfindung die Verwendung von Lichtleitern in Beleuchtungs- oder Anzeigevorrichtungen.

Für Beleuchtungs- oder Anzeigezwecke kann es gewünscht sein, linienförmige Lichtquellen einzusetzen. Als eine solche Lichtquelle kann ein Lichtemitter mit einem daran gekoppelten seitenemittierenden Lichtleiter dienen. Eine solche Anordnung ist unter anderem im Hinblick auf eine raumsparende Bauweise und auch eine hohe Robustheit einer Anordnung aus vielen kleinen nebeneinander angeordneten Emittern, wie etwa einer LED-Kette überlegen. So kann es bei einer solchen Kette aufgrund der hohen Anzahl von Komponenten schnell zum Ausfall einzelner Leuchtdioden kommen, die sofort störend ins Auge fällt.

Eine andere Möglichkeit zur Schaffung linienförmiger Lichtquellen sind seitenemittierende Lichtleiter. Bei diesen Lichtleitern sind an einem oder beiden Enden Lichtemitter angeschlossen, welche Licht in den Lichtleiter einkoppeln. Im Lichtleiter sind Streuelemente verteilt, welche das im Lichtleiter geleitete Licht herausstreuen. Diese Lichtquellen schaffen eine sehr homogene Beleuchtung. Allerdings ist der gesamte Lichtstrom durch die vom Lichtemitter bereitgestellte Intensität begrenzt.

Auch wenn der Lichtleiter für das Auge homogen leuchtet, kann ein Problem beim Biegen des Lichtleiters entstehen. Wird der Lichtleiter gebogen, z.B. bei der Befestigung durch Klammern (Clips) am Untergrund, kann sich das nur lose auf dem Kern liegende streuende Cladding ablösen oder wird durch die Biegung am Außenbereich gestreckt und damit dünner und im Bogeninneren gestaucht, so dass Falten entstehen können. Dabei können Luftspalte zwischen streuendem Cladding und lichtleitendem Kern entstehen, welche auch beim wieder ausrichten bestehen bleiben. Diese führen dann zu einer lokal unterschiedlichen Auskopplung des Lichts und damit zu einer inhomogenen Lichtintensität.

Der Erfindung liegt mithin die Aufgabe zugrunde, eine Lichtquelle mit linienförmiger Anmutung bereitzustellen, die einen flexiblen Lichtleiter aufweist, der eine homogene Lichtabstrahlung mit hoher Leuchtdichte aufweist. Diese Aufgabe wird durch den Gegenstand der unabhängigen Ansprüche gelöst. Vorteilhafte Ausgestaltungen sind in den abhängigen Ansprüchen angegeben. Als Lichtquelle mit linienförmige Anmutung wird eine Lichtquelle verstanden, die für das unbewaffnete Auge eines Betrachters in normalem Sehabstand als leuchtende Linie ohne wesentliche Querausdehnung erscheint. Diese Linie muss nicht geradlinig sein, sondern kann insbesondere auch in Kurvenform verlaufen. Demgemäß sieht die Erfindung einen seitenemittierenden Lichtleiter vor, umfassend zumindest eine als seitenemittierende Faser ausgebildete lichtleitende Faser, so dass in der Faser geleitetes Licht entlang der Längsrichtung verteilt herausgestreut wird, sowie einen die Faser umgebenden Schlauch, wobei der Schlauch transluzent und lichtstreuend ausgebildet ist, so dass der Faser abgegebenes Licht unter Streuung den Schlauch durchqueren kann, wobei der Schlauch von einer transparenten Ummantelung umgeben ist. Dabei werden Schlauch und Ummantelung aus Kunststoff gebildet. Die zumindest eine lichtleitende Faser ist lose im Schlauch geführt und die zumindest eine lichtleitende Faser ist eine seitenemittierende Glasfaser. Der Schlauch weist eine Wandstärke auf, die um mindestens einen Faktor fünf kleiner ist als der äußere Durchmesser der transparenten Ummantelung, wobei der Durchmesser der transparenten Ummantelung mindestens 1 Millimeter beträgt und die Wandstärke des Schlauchs geringer als 200 Mikrometer ist.

Bevorzugt wird nicht nur eine einzelne lichtleitende Faser, sondern ein Faserbündel mit mehreren lichtleitenden Fasern im Schlauch geführt. Die Aufteilung in mehrere Fasern ist günstig, um den Lichtleiter möglichst flexibel zu halten.

Für die Flexibilität des Lichtleiters ist es vorgesehen, dass die zumindest eine Faser, beziehungsweise das Faserbündel lose im Schlauch 3 geführt ist. Es besteht demgemäß keine Verbindung zwischen Schlauch und der oder den angrenzenden Fasern. Dadurch können sich die Fasern innerhalb des Schlauchs insbesondere in Längsrichtung bewegen, was das Biegen erleichtert und beim Biegen Spannungen auf die Faser verhindert.

Im Inneren des Schlauchs ist also zumindest eine Faser, vorzugsweise eine Vielzahl von lichtleitenden Fasern in Form eines Faserbündels angeordnet, bei dem die Fasern jeweils seitenemittierend ausgebildet sind, so dass in den jeweiligen Fasern eingekoppeltes Licht entlang der Längserstreckung des Lichtleiters nach und nach herausgestreut wird, unter weiterer Streuung durch den Schlauch hindurchtritt und durch die Ummantelung nach außen abgegeben wird. Der Lichtleiter weist also einen zumindest zweischaligen Aufbau auf, mit der äußeren, transparenten Ummantelung und den eine innere Ummantelung bildenden Schlauch. Dadurch, dass der Schlauch lichtstreuend ist, wird die Winkelverteilung des von den Fasern abgegebenen Lichts weiter homogenisiert, so dass in einer bevorzugten Ausführungsform in einem Winkelbereich von +45° bis -45° in jede Raumrichtung die Abweichung der Abstrahlungsintensität im Vergleich zu 0° (senkrecht) kleiner als 55%, besonders bevorzugt kleiner 30% und ganz besonders bevorzugt kleiner als 20% ist. Dies gilt vor allem und auch in gebogenen Bereichen des erfindungsgemäßen Lichtleiters

Der Lichtleiter kann mit einem Verfahren hergestellt werden, bei welchem zumindest eine lichtleitende, seitenemittierende Faser in einem lichtstreuend und transluzent ausgebildeten Schlauch aus Kunststoff angeordnet wird, wobei der Schlauch mit der darin enthaltenen zumindest einer lichtleitenden Faser dann mit einer transparenten Ummantelung aus Kunststoff umgeben wird.

Mit dem hier beschriebenen Lichtleiter wird auch das Problem einer Bildung von Luftspalten nach einer Biegung umgangen. Selbst wenn es zwischen der Ummantelung und dem Schlauch zur lokalen Ausbildung eines Luftspalts kommt, beeinflusst dieser nicht mehr die Lichtauskopplung und damit die lokale Streueffizienz, da die Streuung und Auskopplung des Lichts bereits im Inneren des Schlauchs in den einzelnen lichtleitenden Fasern erfolgt.

Die Erfindung wird nachfolgend genauer und anhand der Figuren beschrieben.

## Kurzbeschreibung der Figuren

Fig. 1 zeigt eine Lichtquelle mit einem seitenemittierenden Lichtleiter.

Fig. 2, Fig. 3 und Fig. 4 sind Querschnittansichten durch seitenemittierende Fasern.

Fig. 5 zeigt Querschnittansichten durch einen Lichtleiter

Fig. 6 ist eine Variante mit einer einzelnen lichtleitenden Faser.

Fig. 7 ist eine Variante des Beispiels der Fig. 5 mit einem Effektabschnitt.

Fig. 8, Fig. 9 und Fig. 10 zeigen in Querschnittansicht Varianten eines Lichtleiters mit einem Befestigungselement.

Fig. 11 ist ein Beispiel eines Lichtleiters mit zusätzlichen Kanälen in Längsrichtung.

Fig. 12 und Fig. 13 sind Diagramme mit Messwerten des Lichtflusses von Lichtleitern vor und nach einer Biegung.

Fig. 14 zeigt die winkelabhängige Luminanz für zwei Lichtleiter.

Fig. 15 zeigt die Leuchtdichte in Abhängigkeit von der Längsposition entlang zweier Lichtleiter.

Fig. 16 stellt einen Lichtleiter mit einem den Schlauch umgebenden Bereich mit niedrigerem Brechungsindex dar.

Fig. 17 zeigt den Strahlengang an einen Lichtleiter.

Fig. 18 zeigt Simulationen der Lichtabstrahlung für einen Lichtleiter mit und ohne Luftspalt zwischen Ummantelung und leuchtendem innerem Teil.

Fig. 19 ist ein Diagramm der scheinbaren Breite des leuchtenden inneren Teils in Abhängigkeit von der Breite des Luftspalts.

Fig. 20 zeigt eine Lichtquelle, bei welcher das Licht in den seitenemittierenden Lichtleiter über einen weiteren Lichtleiter eingekoppelt wird.

## Detaillierte Beschreibung der Erfindung

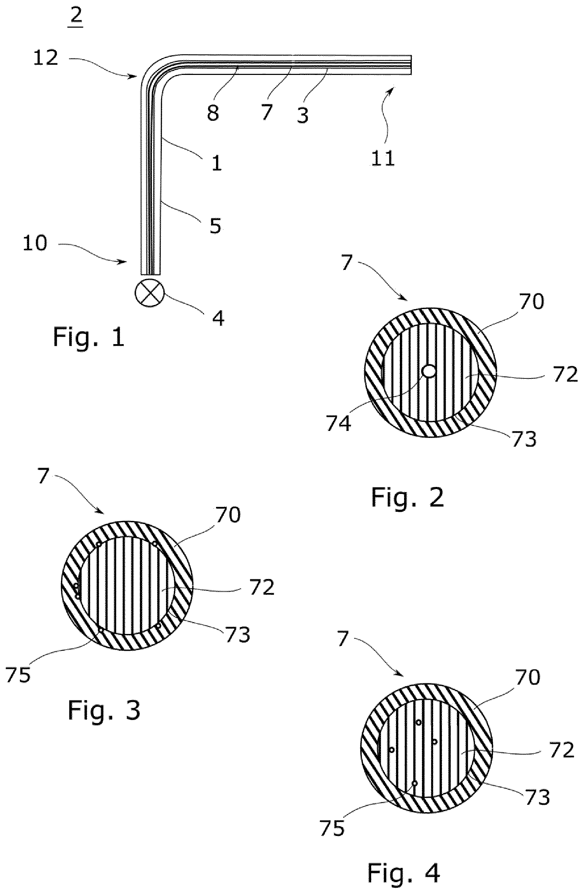

In Fig. 1 ist schematisch eine Lichtquelle 2 mit einem seitenemittierenden Lichtleiter 1 gemäß dieser Offenbarung dargestellt. Die Lichtquelle 2 umfasst einen Lichtemitter 4, welcher an einem Ende 10 des Lichtleiters 1 optisch zumindest einer lichtleitenden Faser 7, vorzugsweise mit den lichtleitenden Fasern 7 eines Faserbündels 8 gekoppelt ist, um Licht in die eine oder mehrere Fasern 7 einzukoppeln. Allgemein, ohne Beschränkung auf das dargestellte Ausführungsbeispiel werden Halbleiter-Lichtemitter für die Lichtquelle 2 bevorzugt. Diese können Leuchtdioden oder Halbleiterlaser umfassen. Auf diese Weise können auch mehrere Lichtemitter mit unterschiedlichen Farben gekoppelt sein, um einen Beleuchtung zu erhalten, deren Lichtfarbe einstellbar ist. Anders als in Fig. 1 dargestellt können auch an beiden Enden 10, 11 des Lichtleiters 1 Lichtemitter 4 angeordnet sein, um deren Licht in die Fasern 7 einzukoppeln.

Allgemein verläuft das Faserbündel 8 in einem Schlauch 3. Dieser ist wiederum von einer Ummantelung 5 umgeben. Sowohl der Schlauch 3, als auch die Ummantelung 5 sind aus Kunststoff. Dies verleiht dem Lichtleiter 1 eine hohe Flexibilität, so dass dieser in einfacher Weise mit einer Biegung 12 verlegt und fixiert werden kann. Im dargestellten Beispiel ist der Lichtleiter 1 beispielhaft mit einer um 90° umlenkenden Biegung 12 versehen worden.

Typischerweise unterscheidet sich ein seitenemittierender Lichtleiter von Lichtleitern zur Datenübertragung durch eine geringere vorgesehene Länge, da mit steigender Länge bei gegebener Helligkeit des angekoppelten Lichtemitters die Leuchtdichte sinkt. Ohne Beschränkung auf bestimmte Ausführungsformen ist dazu in einer Weiterbildung der Erfindung vorgesehen, dass der Lichtleiter 1 eine Länge im Bereich von 0,5 Meter bis 100 Meter, vorzugsweise bis 50 Meter aufweist. Große Längen sind insbesondere in Verbindung mit Lasern als Lichtemitter geeignet. Für dekorative Beleuchtungen und andere lichttechnische Anwendungen sind kürzere Längen bis 105 Meter, vorzugsweise 2,5 bis 5 Meter besonders geeignet. Im medizinischen Bereich, u.a. als Komponente, zur einmaligen oder mehrmaligen Verwendung, in Einrichtungen für diagnostische und therapeutische Behandlungensind Längen kleiner 0,5 Meter, bevorzugt kleiner 0,1 Meter, insbesondere bevorzugt 0,01 bis 0,05 Meter geeignet bei dabei bevorzugtem Durchmesser des Lichtleiters 1 von circa 1mm und dünner.

Fig. 2 zeigt eine Ausführungsform einer lichtleitenden, seitenemittierenden Faser 7 in Querschnittansicht. Ein Faserbündel 8 für den Lichtleiter kann dann durch Zusammenfassen mehrerer solcher Fasern 7 hergestellt werden. Ohne Beschränkung auf das dargestellte Beispiel umfasst die Faser 7 allgemein einen Faserkern 72, der von einem Fasermantel 70 umgeben ist, wobei der Faserkern 72 einen höheren Brechungsindex als der Fasermantel 70 aufweist, so dass Licht im Faserkern 72 in üblicher Weise unter Totalreflexion an der Grenzfläche 73 zum Fasermantel 70 geführt werden kann. Im Faserkern 72 verläuft in Längsrichtung der lichtleitenden Faser 7 eine lichtstreuende Seele 74. Diese streut im Faserkern 72 geführtes Licht teilweise so, dass dieses aus der Faser 7 austreten kann. Auf diese Weise wird kontinuierlich entlang der Faser 7 Licht herausgestreut.

Fig. 3 zeigt ein Beispiel einer weiteren Ausführungsform einer lichtleitenden Faser 7. Ebenso wie die Faser nach Fig. 3 weist die Faser 7 einen Faserkern 72 auf, der von einem Fasermantel 70 mit niedrigerem Brechungsindex umgeben ist. Diese Ausführungsform basiert darauf, dass an der Grenzfläche 73 zwischen Faserkern 72 und Fasermantel 70 lichtstreuende Elemente 75 vorhanden sind. Diese ändern durch Streuung die Richtung des ansonsten an der Grenzfläche 73 reflektierten Lichts so, dass das Licht teilweise herausgestreut wird. Allgemein können die lichtstreuenden Elemente auch im Fasermantel 70 vorhanden sein. Insbesondere die dann nahe oder an der Grenzfläche befindlichen lichtstreuenden Elemente bewirken dann das Herausstreuen des Lichts. Fig. 4 ist eine weitere Ausführungsform, bei welcher lichtstreuende Elemente 75 im Faserkern 72 verteilt sind. Allgemein weisen die lichtleitenden Fasern 7 gemäß einer Ausführungsform also einen Faserkern 72 und einen Fasermantel 70 auf, der einen niedrigeren Brechungsindex als der Faserkern 72 aufweist, wobei zumindest ein lichtstreuendes Element 74, 75 in der Faser 7 so angeordnet ist, dass dieses im Faserkern 72 geführtes Licht in Längsrichtung der Faser 7 nach und nach herausstreut. Im Falle der Fig. 2 ist ein einzelnes lichtstreuendes Element in Gestalt einer sich in Längsrichtung der Faser 7 erstreckenden Seele 74 vorgesehen. Es können aber auch mehrere Seelen 74 vorhanden sein. Alle dargestellten Ausführungsbeispiele können auch miteinander kombiniert werden. So kann die Ausführungsform nach Fig. 2 auch zusätzliche lichtstreuende Elemente 75 an der Grenzfläche 73 oder im Faserkern 72 aufweisen. Die zumindest eine Faser 7 kann aus Glas oder auch aus Kunststoff gefertigt sein. Die lichtleitenden Fasern 7 sind seitenemittierende Glasfasern. Diese Ausführungsform ist von Vorteil, da die hohe Transparenz der Gläser über längere Strecken ausgenutzt und aufgrund der Verwendung eines Faserbündels mit mehreren dünnen Fasern dennoch ein flexibler Lichtleiter 1 geschaffen werden kann.

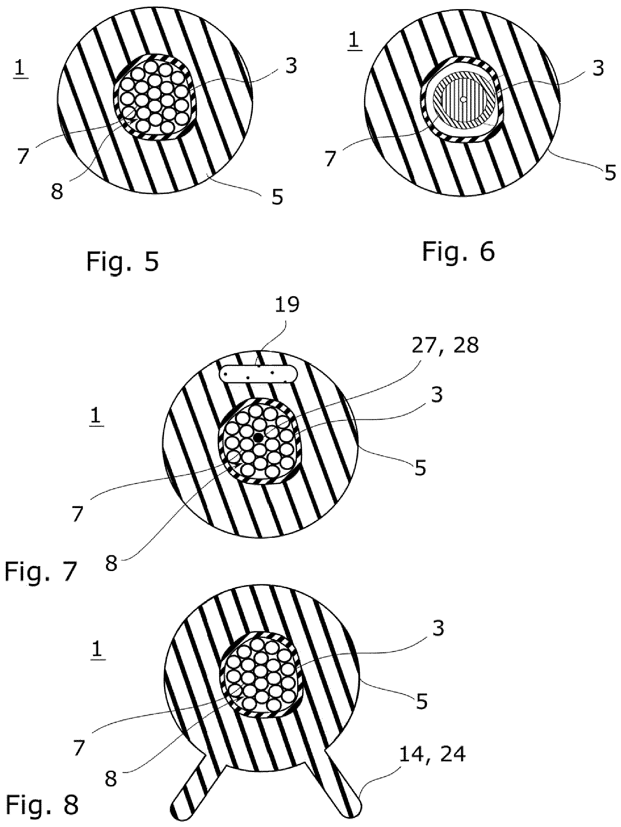

Fig. 5 zeigt einen seitenemittierenden Lichtleiter 1 im Querschnitt. Der Lichtleiter 1 umfasst ein Faserbündel 8 mit mehreren lichtleitenden, seitenemittierenden Fasern 7, die Licht entlang der Längsrichtung verteilt aus den Fasern 7 und damit auch aus dem Lichtleiter 1 herausstreuen, so dass eine dünne, langgestreckte, oder linienförmige Beleuchtung geschaffen wird. Das Faserbündel 8 ist von einem Schlauch 3 umgeben. Der Schlauch ist lichtstreuend und transluzent. Dadurch kann von den Fasern 7 des Faserbündels 8 abgegebenes Licht den Schlauch 3 durchqueren, wobei das Licht allgemein zumindest teilweise in der Wandung des Schlauchs 3 gestreut wird. Der Schlauch 3 ist weiterhin von einer transparenten Ummantelung 5 umgeben. Schlauch 3 und Ummantelung 5 sind aus Kunststoff. Damit wird ein flexibel verlegbarer Lichtleiter 1 geschaffen, der insbesondere biegbar ist.

Der Schlauch 3 ist allgemein vorzugsweise dünnwandig ausgeführt. Damit wird der Durchmesser der Anordnung aus Faserbündel 8 und Schlauch 3 möglichst klein gehalten. Dies ist von Vorteil um eine hohe Leuchtdichte zu erreichen. Aus diesem Grund sollten sich auch die Wandstärke des Schlauchs und der Durchmesser des Lichtleiters 1, beziehungsweise der Ummantelung 5 möglichst deutlich unterscheiden. Ein großes Verhältnis aus äußerem Durchmesser und Wandstärke des Schlauchs 3 reduziert beim Biegen auch die am Schlauch und im Faserbündel 8 gegebenen Biegeradien und verhindert auf diese Weise Brüche der Fasern 7 im Faserbündel 8 bei einer zu starken Verbiegung des Lichtleiters 1. Es ist daher vorgesehen, dass der Schlauch 3 eine Wandstärke aufweist, die um mindestens einen Faktor fünf kleiner ist als der äußere Durchmesser der transparenten Ummantelung 5. Weiterhin ist dazu vorgesehen, dass der Durchmesser der transparenten Ummantelung mindestens 1 Millimeter, vorzugsweise mindestens 2 Millimeter beträgt, um die Biegeradien im Faserbündel 8 zu begrenzen.

Allgemein ist es auch vorgesehen, dass die Wandstärke des Schlauchs 3 höchstens 200 Mikrometer, insbesondere höchstens 100 Mikrometer ist. Damit wird eine hohe Flexibilität des inneren Teils des Lichtleiters mit Schlauch 3 und darin aufgenommenem Faserbündel 8 erreicht. Gleichzeitig wird damit eine hohe Leuchtdichte des Lichtleiters und eine homogene Winkelverteilung des seitlich emittierten Lichts, insbesondere im Zusammenspiel mit der Verwendung von Streupartikeln deren Durchmesser mehr als Faktor 100 kleiner sind als die Wandstärke von Schlauch 3, besonders bevorzugt mehr als Faktor 150 kleiner, ganz besonders bevorzugt mehr als Faktor 200 kleiner. Da es sich im Allgemeinen um Streupartikel mit einer Größenverteilung handelt, ist mit dem Durchmesser der Streupartikel der mittlere Wert (auch D50 genannt) gemeint.

Das Verhältnis von Durchmesser der Ummantelung 5 zu Durchmesser des Schlauchs 3 beträgt bevorzugt mindestens 1,5/1, um bei gegebenem Durchmesser des Lichtleiters 1 eine hohe Leuchtdichte zu erreichen und zu enge Biegeradien des Faserbündels 8 zu vermeiden. Anders als in Fig. 5 gezeigt muss die Ummantelung 5 keinen kreisrunden Querschnitt aufweisen. Gleiches gilt auch für den Schlauch 3. Beim dargestellten Beispiel passt sich der Schlauch 3 bereits der Form des Faserbündels 8 an und dessen Querschnitt ist damit nicht exakt kreisrund. In solch einem Fall kann der mittlere Durchmesser von Ummantelung 5 und Schlauch 8 für das oben angegebene Verhältnis von 1,5 zu 1 angesetzt werden. Ebenso ist es aber auch möglich die Querschnittflächen zu betrachten. Dabei wird es allgemein bevorzugt, wenn das Verhältnis von Querschnittfläche der von der Außenkontur der Ummantelung 5 umschlossenen Fläche zur von der Außenkontur des Schlauchs 3 umschlossenen Querschnittfläche mindestens 2,25/1 beträgt. Bei einer dünnen Wandstärke des Schlauchs 3 entspricht die von der Außenkontur des Schlauchs umschlossene Querschnittfläche etwa der Querschnittfläche des Faserbündels 8.

Gemäß einer bevorzugten Ausführungsform hat das Faserbündel 8 einen Durchmesser im Bereich von 0,5 mm bis 5 mm, vorzugsweise von 1 mm bis 3 mm. Entsprechend beträgt für nicht runde Geometrien die Querschnittfläche des Faserbündels 0,19 mm$^2$ bis 19,7 mm$^2$, vorzugsweise 0,78 mm$^2$ bis 7,1 mm$^2$.

Als besonders geeignet in Bezug sowohl auf die optischen, als auch die mechanischen Eigenschaften des Lichtleiters 1 hat es sich erwiesen, wenn der Schlauch 3 als um das Faserbündel 8 geschrumpfter Kunststoffschlauch ausgebildet ist. Durch das Aufschrumpfen kann eine gute Anpassung der Form des Schlauchs 3 an die Kontur des Faserbündels 8 erreicht werden, ohne das Faserbündel 8 stark zu komprimieren. Außerdem sind solche Schrumpfschläuche mit einer Wandstärke von 30 μm und weniger verfügbar, was die Leuchtdichte des Lichtleiters weiter erhöht. Gegebenenfalls kann der Kunststoffschlauch auch nur teilweise oder abschnittweise um das Faserbündel geschrumpft sein. Generell ist es günstig, wenn die Fasern 7 noch lose im Schlauch 3 zusammengefasst, beziehungsweise lose, ohne stoff- oder formschlüssige Verbindung im Schlauch 3 geführt sind. Damit werden Zugspannungen auf einzelne Fasern 7 und damit einhergehende Faserbrüche beim Biegen des Lichtleiters 1 vermieden.

Für die lichtleitenden Fasern 7 sind Durchmesser im Bereich von 10 bis 250 μm, vorzugsweise 20 μm bis 100 μm, vorzugsweise von 30 μm bis 70 μm geeignet, um eine gute Flexibilität des Faserbündels 8 zu erreichen.

Als Material für den Schlauch 3 eignet sich unter anderem Polyester. Um dem Schlauch 3 lichtstreuende Eigenschaften zu verleihen, können im Kunststoff lichtstreuende Partikel als Additiv enthalten sein. Gemäß einer Ausführungsform enthält der Kunststoff Oxid-Partikel. Geeignet sind besonders hochbrechende Oxide, wie Titanoxid. In einer Ausführungsform ist mithin ein Schlauch 3 in Form eines Polyesterschlauchs mit Oxid-Partikeln, insbesondere Titanoxidpartikeln vorgesehen. Die in den Schlauch 3 eingebetteten Streupartikel haben dabei zu mehr als 50% bevorzugt einen Durchmesser von weniger als 1 μm, um die Abstrahlhomogenität zu erhöhen.

Als Kunststoff für die Ummantelung 5 hat sich besonders ein Polymerblend als geeignet erwiesen. Mit einem Polymerblend lassen sich die Eigenschaften sowohl einer hohen Transparenz, als auch einer hohen Flexibilität vereinen. Als eine Komponente, beziehungsweise eines der Polymere des Polymerblends kann vorzugsweise ein aliphatisches Polyurethan eingesetzt werden. Diese ist besonders elastisch und kann zu einem hoch transparenten Polymerblend mit anderen Kunststoffen kombiniert werden. Insbesondere kann ein solches aliphatisches Polyurethan auch ein thermoplastisches Elastomer sein. Alternativ oder zusätzlich kann als Komponente auch ein anderes thermoplastische Elastomer Bestandteil des Polymerblends sein. Gemäß einer weiteren Ausführungsform ist dementsprechend vorgesehen, dass zumindest eines der Polymere des Polymerblends ein thermoplastisches Elastomer bildet.

Bei einer weiteren Ausführungsform ist eines der Polymere des Polymerblends ein Polycarbonat. Polycarbonate sind für die Transparenz der Ummantelung von Vorteil. Gleiches gilt für PMMA. Gemäß noch einer weiteren alternativen oder zusätzlichen Ausführungsform ist daher vorgesehen, dass eines der Polymere des Polymerblends ein Polymethylmethacrylat ist.

Eine besonders geeignete Kombination ist ein Polymerblend, welcher allgemein Polymethylmethacrylat und thermoplastisches Polyurethan enthält. Diese beiden Komponenten können insbesondere alleine den Polymerblend bilden oder bei Vorhandensein weiterer Komponenten die beiden Komponenten mit den zwei größten Anteilen in der Mischung des Blends sein.

Es ist gemäß noch einer Weiterbildung vorgesehen, dass zumindest einer der Kunststoffe von Schlauch 3 und Ummantelung 5 Polymerpartikel enthält. Diese Partikel können die mechanischen Eigenschaften weiter verbessern. So sind Polymerpartikel als Zusatz zur Erhöhung der Schlagzähigkeit bekannt. Eine sehr transparenter und gleichzeitig schlagzäher und abriebfester und damit gegen Verkratzen widerstandsfähiger Kunststoff kann gemäß einer vorteilhaften Weiterbildung erhalten werden, wenn zumindest einer der Kunststoffe von Ummantelung 5 und Schlauch 3 Polymerpartikel mit vernetztem PMMA enthält. Diese Ausführungsform eignet sich dann noch besonders in Kombination mit einem Polymerblend, der PMMA enthält. Gemäß noch einer Weiterbildung der Erfindung ist also ein Polymerblend vorgesehen, der als eine Komponente PMMA enthält und zusätzlich Polymerpartikel mit vernetztem PMMA.

Es ist mit dem hier beschriebenen Aufbau eines Lichtleiters 1 auch möglich, alternativ oder zusätzlich zu Schlagzähmodifikatoren weitere Zuschlagstoffe einzusetzen, die ansonsten für die optischen Eigenschaften eher nachteilig sind. Insbesondere ist daran gedacht, in der Ummantelung 5 zumindest einen Zuschlagstoff einzusetzen, der ein Flammhemmer oder ein UV-Stabilisator sein kann. Die optischen Eigenschaften des Lichtleiters 1 werden durch diese Zuschlagstoffe in der Ummantelung 5 kaum beeinflusst, da die Transmission in den lichtleitenden Fasern nicht gestört wird und das Licht nach dem Passieren des Schlauchs 3 nur eine kurze Strecke durch die Ummantelung 5 zurücklegt.

Fig. 6 zeigt eine Variante des Beispiels der Fig. 5. Anstelle eines Faserbündels 8 weist diese Variante eine einzelne seitenemittierende lichtleitende Faser 7 auf. Die Faser 7 kann wie dargestellt im Vergleich zu Fasern eines Faserbündels dicker sein, um möglichst viel Licht einkoppeln zu können. Andererseits kann aber auch der Querschnitt des Lichtleiter 1 insgesamt kleiner sein, als bei einer Ausführungsform mit einem Faserbündel. Wie dargestellt ist allgemein auch die einzelne Faser 7 lose im Schlauch 3 geführt, beziehungsweise nicht mit dem Schlauch 3 verbunden sein, um das Biegen des Lichtleiters 1 zu erleichtern und auch irreversible Veränderungen nach einem Biegevorgang zu vermeiden. Im dargestellten Beispiel entspricht die Faser dem Aufbau gemäß Fig. 2.

In einer Ausführungsform des Lichtleiters 1 ist vorgesehen, dass der Lichtleiter 1 einen mit der Ummantelung 5 verbundenen, insbesondere in der Ummantelung 5 eingelassenen, langgestreckten, sich entlang der Längsrichtung des Lichtleiters 1 erstreckenden optischen Effektabschnitt 19 umfasst, dessen Beschaffenheit das vom Schlauch 3 abgestrahlte Licht hinsichtlich Farbe, Helligkeit oder Abstrahlrichtung beeinflusst. Ein Beispiel hierzu zeigt die Variante der Fig. 7. Bei diesem Beispiel ist ein Effektabschnitt 19 in Form eines diffus reflektierenden Streifens in der Ummantelung angeordnet. Dieser ändert die räumliche Abstrahlung des Lichts dahingehend, dass ein Winkelbereich um den Lichtleiter 1 abgeschattet und die Helligkeit im übrigen Winkelbereich erhöht wird. Auch die Farbe des abgestrahlten Lichts kann durch eine geeignete Färbung oder Pigmentierung des Effektabschnitts beeinflusst werden. So kann ein Lichtleiter 1 vorgesehen werden, dessen Schlauch 3 mit Faserbündel 8 als helle Linie in einer ersten Farbe vor dem Hintergrund von diffus am Effektabschnitt mit einer anderen Farbe reflektierten Lichts erscheint.

Allgemein, ohne Beschränkung auf das dargestellte Beispiel ist gemäß noch einer Ausführungsform vorgesehen, dass im Schlauch zusammen mit der zumindest einen lichtleitenden Faser 7 ein in Längsrichtung des Lichtleiters 1 verlaufendes Funktionselement geführt wird. Ein solches Funktionselement kann insbesondere ein elektrischer Leiter 27 oder ein Bewehrungselement 28 sein. Als Bewehrungselement 28 kommt ein Metall- oder Kunststoff-Draht oder ein Seil in Betracht. Auch kann ein elektrischer Leiter 27 gleichzeitig auch die Funktion eines stabilitätserhöhenden Bewehrungselements 28 haben. Weiterhin ist auch denkbar, ein solches Funktionselement außerhalb des Schlauchs 3 in der Ummantelung 5 anzuordnen.

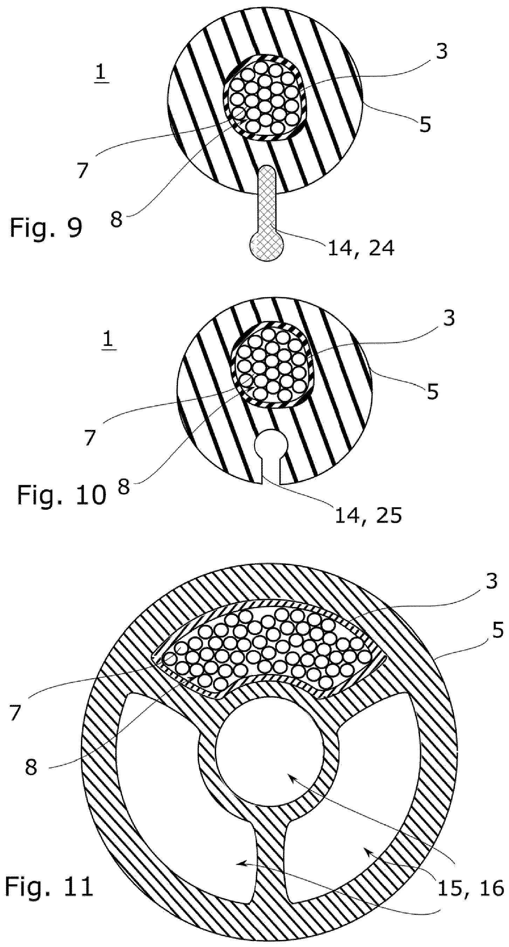

Die Ausführung des Lichtleiters 1 mit einer Ummantelung 5 aus Kunststoff ermöglicht die Fertigung in einem strangformenden Verfahren, beispielsweise durch Extrusion. Mit diesem Verfahren lassen sich in sehr einfacher Weise auch kompliziertere Geometrien realisieren. In einer Ausführungsform ist dazu vorgesehen, dass die Ummantelung 5 ein sich axial entlang des Lichtleiters 1 erstreckendes Befestigungselement 14 in Form einer Feder oder Rippe 24 aufweist. Fig. 8 zeigt dazu ein Beispiel, bei welchem in der Ummantelung 5 zwei solcher Rippen 24 ausgeformt sind. Anders als dargestellt kann das Befestigungselement auch ein separates Element darstellen, welches in der Ummantelung 5 verankert ist. Ein Beispiel dieser Ausführungsform zeigt Fig. 9. Die Rippe 24 kann beispielsweise ein vorgefertigtes Element aus einem anderen Kunststoff als das Material der Ummantelung 5 oder auch ein Metallelement sein. Die Rippe 24 in Form eines separaten Elements kann beispielsweise bei der Extrusion ebenso wie der Schlauch 3 in der Ummantelung 5 verankert werden. Um den Lichtleiter 1 zu montieren, kann der Lichtleiter mit der Rippe 24 dann in eine entsprechende Nut eines mit dem Lichtleiter 1 zu versehenden Bauteils eingesetzt werden.

Fig. 10 ist ein Beispiel einer weiteren Ausführungsform. Bei dieser Ausführungsform ist ein sich axial entlang des Lichtleiters 1 erstreckendes Befestigungselement 14 in Form einer Nut 25 vorgesehen. Die Nut 25 kann wie dargestellt direkt in die Ummantelung 5 eingefügt, beziehungsweise aus der Form der Ummantelung 5 heraus geformt sein. Bei den bisher dargestellten Beispielen war der Schlauch 3 mit dem Faserbündel 8 mehr oder weniger zentriert im Querschnitt der Ummantelung angeordnet. Das Beispiel der Fig. 10 zeigt weiterhin, dass auch eine exzentrische Anordnung möglich ist.

Die Ummantelung 5 kann gemäß noch einer weiteren Ausführungsform zumindest einen sich in axialer Richtung erstreckenden Kanal 15, insbesondere in Form eines Hohlraums 16 aufweisen. Ein Beispiel für eine solche Ausführungsform zeigt Fig. 11. Bei diesem Beispiel sind drei Kanäle 15 vorhanden, die jeweils Hohlräume 16 bilden. Anders als dargestellt können die Kanäle 15 auch ausgefüllt sein, beispielsweise mit Kabeln, Drähten oder einem Füllmaterial. Fig. 11 ist auch ein Beispiel dafür, dass der Querschnitt des Schlauchs 3 mit dem darin aufgenommenen Faserbündel 8 nicht kreisförmig sein muss. Mit der Anordnung lassen sich vielmehr hinsichtlich der Querschnittform viele Varianten realisieren. Im Beispiel hat der Schlauch die Querschnittform eines Kreisringsektors, ebenso wie die beiden seitlich angrenzenden Kanäle 15.

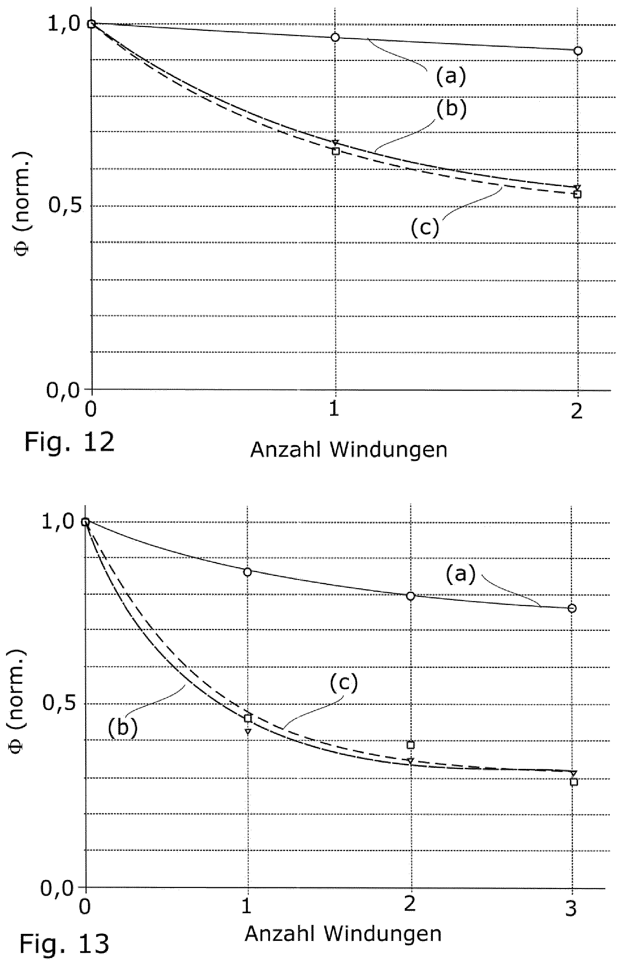

Im Allgemeinen zeichnen sich die hier beschriebenen Lichtleiter 1 durch eine hohe Resistenz gegenüber einer Veränderung der optischen Eigenschaften nach einem Biegen des Lichtleiters aus. Dies, da die Lichtabstrahl-Eigenschaften im Wesentlichen durch den Schlauch 3 und die darin geführten Fasern 7 bestimmt werden. Insbesondere gilt gemäß einer Ausführungsform, dass die durch die Biegung des Lichtleiters 1 verursachten zusätzlichen Lichtverluste bei einem Biegeradius des Lichtleiters 1 von 21 mm weniger als das 0,1-fache der gesamten im Lichtleiter geführten Lichtintensität pro Wicklung des Lichtleiters 1 beträgt. Weiterhin können die durch eine Biegung des Lichtleiters 1 verursachten zusätzlichen Lichtverluste bei einem Biegeradius des Lichtleiters 1 von 12 mm weniger als das 0,3-fache der gesamten im Lichtleiter geführten Lichtintensität pro Wicklung des Lichtleiters 1 betragen. Diese Eigenschaften gelten insbesondere für Lichtleiter 1 mit einem Außendurchmesser, beziehungsweise einem Durchmesser der Ummantelung von 3 mm oder weniger, insbesondere also für Lichtleiter mit einem Durchmesser im Bereich von 1 bis 3 Millimeter. Die zusätzlichen, also zusätzlich zu den ohnehin durch Abstrahlung des seitenemittierenden Lichtleiters verursachten Lichtverluste sind sonst als Abschnitte zu erkennen, die gegenüber benachbarten Bereichen heller erscheinen. Demnach erscheint die Lichtabstrahlung dann ungleichmäßig entlang des Lichtleiters, mit einer oder mehreren heller leuchtenden Bereichen. Außerdem fehlt dieses zusätzlich ausgekoppelte Licht im weiteren Verlauf des Lichtleiters, so dass dieser dann insgesamt dunkler ist. Die Fig. 12 und Fig. 13 zeigen dazu die Messungen des Lichtflusses vor und nach Aufwickeln des Lichtleiters mit einer oder mehreren Windungen. Fig. 12 zeigt den Fluss im ursprünglichen Zustand und nach Umwickeln mit einer und mit zwei Windungen mit einem Biegeradius von 21 Millimetern.

Fig. 13 zeigt ein ähnliches Diagramm mit Messwerten nach Umwicklung mit ein bis drei Windungen und einem Biegeradius von 12 Millimetern. Kurve (a) zeigt in beiden Diagrammen die Messwerte zu einem Lichtleiter 1, wie er hierin beschrieben ist. Zum Vergleich zeigen die Kurven (b) und (c) Messwerte an herkömmlichen seitenemittierenden Polymer-Lichtleitern. Die Messwerte sind jeweils auf den Wert ohne Biegung normiert. Wie zu erkennen ist, wird bei dem hier beschriebenen Lichtleiter die abgestrahlte Intensität kaum durch die starke Biegung beeinflusst. Auch nach einer Wicklung mit drei Windungen mit einem Biegeradius von 12 mm liegt der Fluss bei über 70% des Ursprungswerts (Fig. 13). Bei Lichtleitern aus dem Stand der Technik (Kurven (b) und (c)) zeigen sich demgegenüber Reduzierungen des Flusses nach zwei Windungen mit 21 mm Biegeradius um fast die Hälfte (Fig. 12) und bei drei Windungen mit einem Biegeradius von 12 mm um fast 2/3 (Fig. 13).

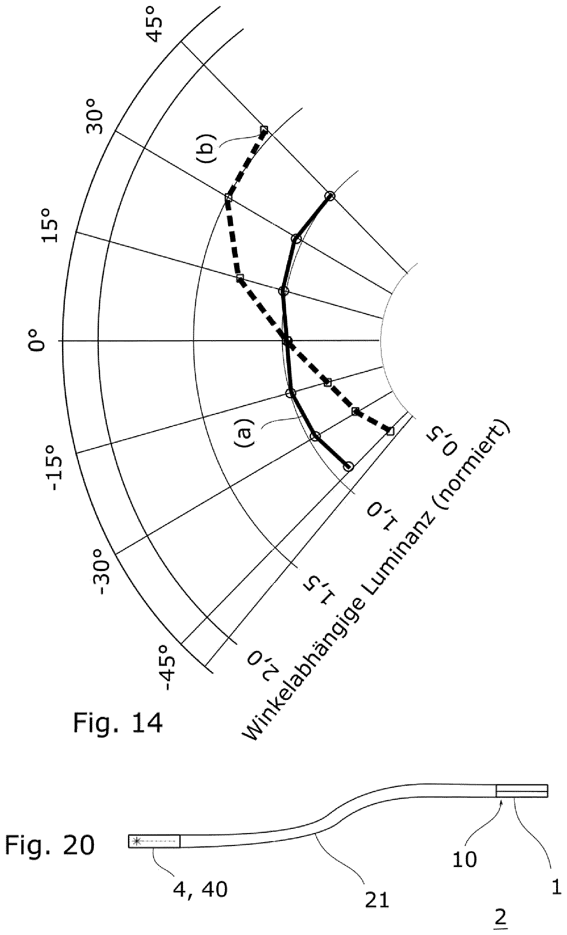

Mit dem hier beschriebenen Lichtleiter wird auch eine besonders hohe Homogenität des abgestrahlten Lichts erreicht. Dies ergibt sich insbesondere dadurch, dass die Winkelverteilung des von den einzelnen lichtleitenden Fasern 7 abgegebenen Lichts nochmals durch die Streuung in der Wandung des Schlauchs 3 homogenisiert wird. In einer Ausführungsform ist vorgesehen, dass der Lichtleiter 1 eine Winkelverteilung des abgestrahlten Lichts aufweist, bei welcher für die Asymmetrie $A = (I_{45°} - I_{135°})/(I_{45°} + I_{135°})$ der Lichtintensität $I_{45°}$ des in einem Winkel von 45° zur Lichtleitungsrichtung und der Lichtintensität $I_{135°}$ des einem Winkel von 135° zur Lichtleitungsrichtung abgestrahlten Lichts gilt: $A < 0,1$, vorzugsweise $A < 0,05$. Diese Asymmetrie bringt den Unterschied zwischen Abstrahlung von Licht mit einer Richtungskomponente in Vorwärtsrichtung zur Abstrahlung von Licht mit einer Richtungskomponente in Rückwärtsrichtung (also entgegen der Richtung der Lichtleitung) zum Ausdruck. Die niedrige Asymmetrie in der Abstrahlung wird anhand von Fig. 14 verdeutlicht. In Fig. 14 sind zwei Kurven (a) und (b) mit Messwerten der winkelabhängigen Luminanz für zwei Lichtleiter dargestellt. Kurve (a) zeigt die Messwerte für einen Lichtleiter 1 gemäß dieser Offenbarung mit einem Durchmesser von 2 mm. Kurve (b) zeigt zum Vergleich einen Lichtleiter mit einem Faserbündel, jedoch ohne einen transluzenten, lichtstreuenden Schlauch 3. Es ist deutlich, dass die Abstrahlung bei einem Lichtleiter gemäß dieser Offenbarung nahezu perfekt homogen, beziehungsweise winkelunabhängig ist. Demgegenüber zeigt sich bei Kurve (b) eine deutliche Vorwärtsstreuung. Die Abstrahlung mit Richtungskomponente in Richtung der Lichtleitung ist deutlich stärker verglichen mit der Abstrahlung entgegen der Lichtleitungsrichtung.

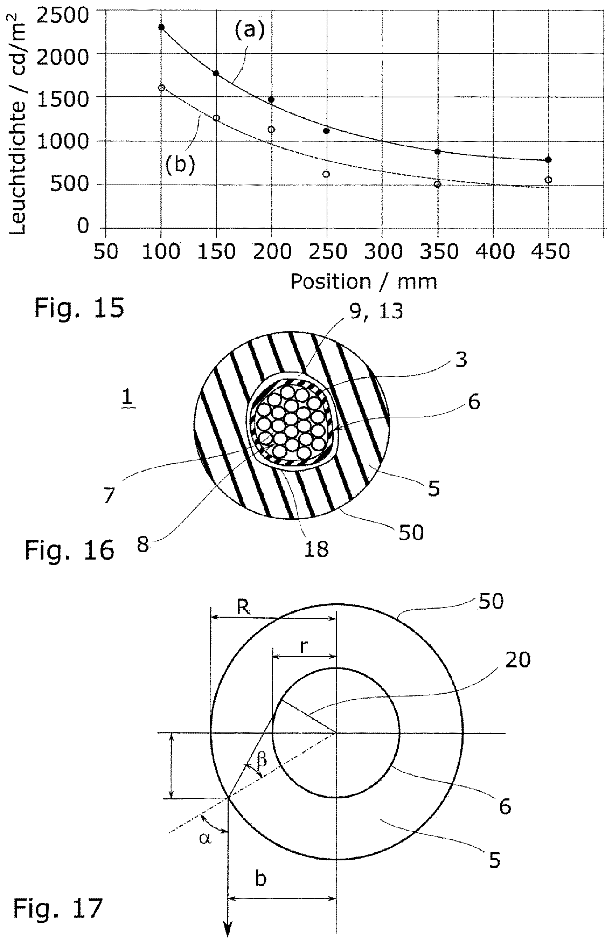

Die Anordnung gemäß dieser Offenbarung führt auch zu einer deutlich höheren Leuchtdichte verglichen mit bisherigen seitenemittierenden Polymer-Lichtleitern. Dies zeigt das Beispiel der Fig. 15. Bei dem hier gezeigten Diagramm wurde die Leuchtdichte in Abhängigkeit der Längsposition am Lichtleiter 1 gemessen. Bedingt dadurch, dass das Licht nach und nach aus dem Lichtleiter 1 herausgestreut wird, sinkt die Leuchtdichte mit größerer Entfernung zum Ende des Lichtleiters mit dem Lichtemitter ab. Dadurch, dass die Fasern mit dem Schlauch zu einem engen Bündel mit geringem Durchmesser zusammengefasst sind, ergibt sich eine höhere Leuchtdichte und damit scheinbare höhere Helligkeit (Kurve (a)) im Vergleich zu einem Lichtleiter, in dem die Fasern in einem einfachen transparenten Schlauch geführt sind (Kurve (b)).

Ein Faktor, welcher die Leuchtdichte beeinflusst, ist die Brechung an der äußeren Oberfläche der Ummantelung 5. Bei einem Lichtleiter 1 mit rundem Querschnitt wirkt die äußere Oberfläche der Ummantelung wie eine Zylinderlinse. Diese vergrößert den aktiv leuchtenden Teil des Lichtleiters 1, nämlich den Schlauch 3 mit dem darin geführten Faserbündel 8. Durch diese optische Vergrößerung sinkt aber die Leuchtdichte entsprechend. Auch wenn dieser Effekt keinen direkten Einfluss auf den gesamten abgestrahlten Lichtstrom hat, erscheint der aktiv leuchtende Teil größer, dafür aber dunkler. Dieser Effekt ist nachteilig, wenn es darum geht, den Lichtleiter als Designelement einzusetzen, welches in Form einer leuchtenden Linie optische Akzentuierungen schafft. Bei geringer Leuchtdichte kann der Lichtleiter beispielsweise in einer hellen Umgebung gegebenenfalls optisch nicht mehr auffällig sein, so dass dieser seine Funktion einer optischen Akzentuierung verliert. Es wäre daher wünschenswert, einen Lichtleiter 1 mit einem inneren, seitenemittierenden, insbesondere strangförmigen oder langgestreckten Teil und einer diesen Teil umgebenden Ummantelung so auszubilden, dass ein durch Brechung an der äußeren Oberfläche hervorgerufener optischer Vergrößerungseffekt an der Außenoberfläche der Ummantelung 5 zumindest vermindert wird. Diese Aufgabe wird allgemein durch einen langgestreckten seitenemittierenden Lichtleiter 1 gelöst, welcher einen inneren langgestreckten Teil, der auch als Kern bezeichnet werden kann, und eine den inneren Teil umgebende Ummantelung 5 aufweist, wobei im inneren Teil Licht durch Einkopplung an einem der Enden 10, 11 des Lichtleiters 1 leitbar ist, welches nach und nach durch Streuung oder Brechung seitlich aus dem inneren Teil durch die Ummantelung 5 hindurch nach außen gelenkt wird, so dass der innere Teil durch die Ummantelung 5

hindurch betrachtet als langgestrecktes, insbesondere linien- oder fadenförmiges leuchtendes Element erscheint, wobei zwischen dem inneren Teil und der Ummantelung 5 eine den inneren Teil umgebende Schicht vorhanden ist, welche einen Brechungsindex aufweist, der niedriger ist, als der Brechungsindex der Ummantelung 5.

In Weiterbildung der zuvor geschilderten Ausführungsformen wird der innere Teil durch den Schlauch 3 mit dem darin enthaltenen Faserbündel 8 gebildet, denn der Schlauch 3 ist derjenige Teil des Lichtleiters 1, der als linien- oder fadenförmige Lichtquelle erscheint. Ein Beispiel einer solchen Ausführungsform, nämlich einen Lichtleiter 1 mit einer den Schlauch 3 umgebenden Schicht 9 mit niedrigerem Brechungsindex zeigt Fig. 16. Wie gesagt bilden der Schlauch 3 mit dem Faserbündel 8 den von der Schicht 9 umschlossenen inneren Teil 6. Im einfachsten und hinsichtlich des optischen Effekts besonders wirkungsvollen Falles ist zwischen der Ummantelung 5 und dem inneren Teil 6 ein Spalt, beziehungsweise ein Abstand vorhanden, so dass die Schicht 9 durch eine Fluidschicht, insbesondere eine Luft- oder allgemeiner eine Gasschicht gebildet wird. In Weiterbildung der bisherigen Ausführungsformen ist zwischen Schlauch 3 und Ummantelung 9 ein fluidgefüllter, insbesondere gasgefüllter, besonders bevorzugt luftgefüllter Spalt vorhanden.

In einer weiteren Ausführungsform kann der innere Teil 6 aber auch durch eine einzelne seitenemittierende Faser gebildet werden. Allgemein stellt der innere Teil 6 dabei denjenigen Teil dar, welcher als leuchtendes Element erscheint. Im Allgemeinen wird dieses leuchtende Element durch die als leuchtend erscheinenden streuenden Elemente definiert, die für den Betrachter die Ausgangspunkte des abgestrahlten Lichts darstellen.

Wenn man eine feste Verbindung zwischen einem weißen, leuchtenden Kern, beziehungsweise inneren Teil und einer transparenten Ummantelung annimmt, dann wird das vom inneren Teil ausgehende Licht gleichmäßig über alle Winkel verteilt durch die transparente Ummantelung 5 geführt und an deren Oberfläche 50 nach dem Brechungsgesetz nach außen geleitet. Zu beachten dabei ist, dass ein Betrachter in einem Beobachtungsabstand, welcher um ein Vielfaches größer sein sollte, als der Kabeldurchmesser (was in der Praxis üblicherweise der Fall ist), mit dem Auge nur die im Wesentlichen parallel von der Ummantelung abgestrahlten Strahlen wahrnehmen kann. Alle unter anderen Winkeln von der Oberfläche des Mantels abgestrahlten Strahlen werden im Auge nicht auf die Netzhaut projiziert und deshalb nicht wahrgenommen. Die Skizze der Fig. 17 illustriert dabei den zugrundeliegenden Strahlengang. Über das Brechungsgesetz kann der Grenzfall bestimmt werden, an welchem Ort sich die äußersten noch mit dem Auge wahrnehmbaren Parallelstrahlen befinden, welche dann den wahrgenommenen Leuchtdurchmesser bilden. Für die Winkel α, β dieses Lichtstrahls 20 gilt nach dem Brechungsgesetz:

$$(1) \quad \frac{\sin \alpha}{\sin \beta} = \frac{n_{Ummantelung}}{n_{Luft}}$$

Mit $\sin \alpha = \frac{b}{R}$ und $\sin \beta = \frac{r}{R}$ ergibt sich für den wahrnehmbaren Durchmesser $D_{vis}$:

$$(2) \quad D_{vis} = 2 * r * n_{Mantel}$$

Dieser Durchmesser entspricht der doppelten Strecke b nach Fig. 17. Bei einem Brechungsindex des transparenten Mantels von etwa $n_{Ummantelung}=1,5$ und einem Durchmesser des weißen leuchtenden Kerns, beziehungsweise inneren Teils 6 von 2·r von $d_{Kern}=2,1$mm ergibt sich ein wahrnehmbarer leuchtender Durchmesser Dvis von 3,2mm. Dies entspricht dem Außendurchmesser der transparenten Ummantelung 5. Obwohl also ein im Vergleich zum Außendurchmesser kleinerer leuchtender Kern verwendet wird, führt dies nicht zu einer erwünschten Erhöhung der Leuchtdichte durch eine kleiner wahrgenommene Fläche.

Erst bei kleineren Durchmessern des inneren Teils von beispielsweise 0,3 mm, wird ein leuchtender Durchmesser von in diesem Fall 0,45mm wahrgenommen, was viel kleiner als der Außendurchmesser des Lichtleiters 1 von 3,2 mm ist und somit zur gewünschten Erhöhung der Leuchtdichte führt.

Ist aber eine Schicht 9 mit niedrigerem Brechungsindex, insbesondere ein Luftspalt zwischen dem leuchtenden Kern oder inneren Teil 6 und der transparenten Ummantelung 5 vorhanden, kommt es zu einer zusätzlichen Brechung des Lichts auch an der inneren Oberfläche des transparenten Mantels, nämlich an der Grenzfläche zwischen der Ummantelung 5 und der Schicht 9, so dass sich neue Verhältnisse für den wahrnehmbaren leuchtenden Durchmesser ergeben. Dies kann aber nicht mehr einfach analytisch berechnet werden, sondern kann über eine Simulation numerisch oder grafisch ermittelt werden. Es zeigt sich, dass überraschenderweise sogar ein leuchtender wahrgenommener Durchmesser erreicht werden kann, der etwas kleiner ist als der Durchmesser des weißen, leuchtenden Kerns, beziehungsweise inneren Teils 6. Der durch die Schicht 9 verursachte Effekt der Erhöhung der Leuchtdichte entsteht dabei insbesondere durch die Form der Grenzfläche zwischen Schicht 9 und Ummantelung. Allgemein bildet die Grenzfläche 18 eine im Wesentlichen oder zumindest teil oder abschnittsweise konkav geformte Brechfläche. Gemäß einer bevorzugten Weiterbildung ist daher vorgesehen, dass die Grenzfläche 18 zwischen der Ummantelung 5 und der Schicht 9 eine konkave Brechfläche bildet, so dass diese als Brechfläche einer Zerstreuungslinse, beziehungsweise eines defokussierenden optischen Element in der Ebene senkrecht zur Längsrichtung des Lichtleiters 1 wirkt.

Unter Berücksichtigung der vorstehenden Überlegung ist es in einer Weiterbildung der Erfindung allgemein bevorzugt, dass der innere Teil 6 einen Durchmesser von mindestens 0,75 Millimetern aufweist. Unterhalb dieses Durchmessers ist der Effekt zwar ebenfalls vorhanden, aber aufgrund des bereits geringen Durchmessers weniger auffallend.

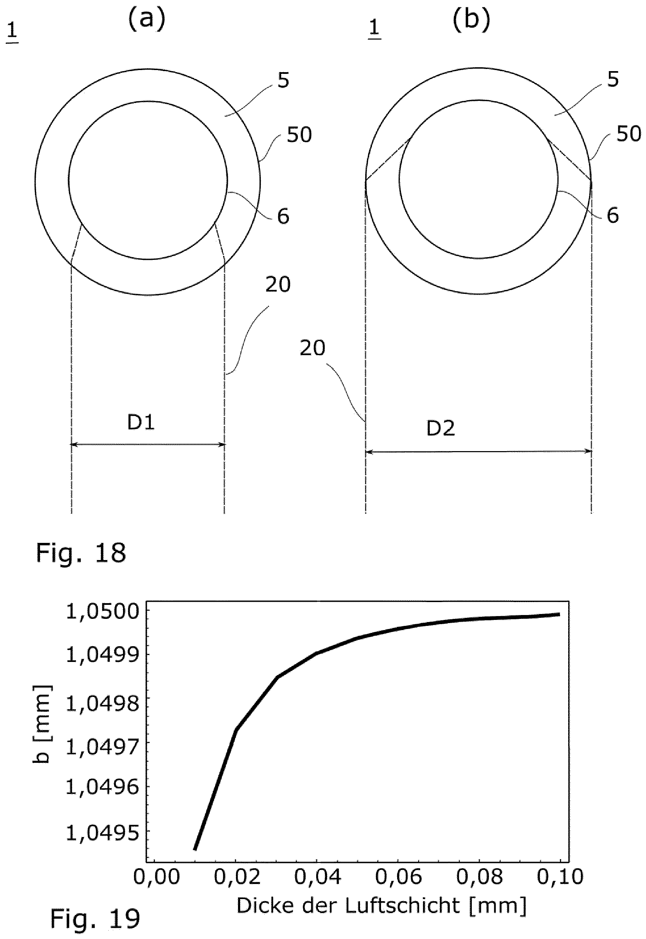

Fig. 18 zeigt in den Teilbildern (a) und (b) zwei Simulationen des Strahlengangs für einen Lichtleiter 1 mit Luftspalt (Teilbild (a)) und ohne Luftspalt (Teilbild (b)). Der Luftspalt ist in Teilbild (a) vereinfachend nicht eingezeichnet.

Es ist deutlich ersichtlich, dass der scheinbare Durchmesser D1 des leuchtenden inneren Teils 6 für einen Betrachter bei der Ausführungsform mit Luftspalt deutlich kleiner ist, als der Durchmesser D2 bei der Ausführungsform ohne Luftspalt (Teilbild (b)). Es ist sogar möglich, dass der scheinbare Durchmesser kleiner ist, als der tatsächliche Durchmesser. Damit erhöht der Luftspalt, beziehungsweise allgemeiner die Schicht 9 mit niedrigerem Brechungsindex effektiv die Leuchtdichte.

Die Dicke der Schicht 9, vorzugsweise des Luftspalts ist insgesamt wenig relevant. Dies zeigt das Diagramm der Fig. 19. In diesem Diagramm ist die halbe scheinbare Breite b, so wie sie in Fig. 17 konstruiert ist, als Funktion der Breite des Luftspalts aufgetragen. Die halbe scheinbare Breite b entspricht dem scheinbaren halben Durchmesser des inneren Teils 6, beziehungsweise dem scheinbaren Radius. Wie aus dem Diagramm ablesbar, sind die Auswirkungen der Breite des Luftspalts auf die scheinbare Breite des inneren Teils 6 minimal. Die Schicht 9 kann daher sehr dünn gehalten werden. Allgemein, ohne Beschränkung auf das dargestellte Beispiel ist dazu in einer Ausführungsform vorgesehen, dass für das Verhältnis der Durchmesser des inneren Teil 6, D6, zum Durchmesser D9 der Schicht 9 gilt:

$$(3) \quad 1 - \frac{D_6}{D_9} \leq 0{,}3$$

Die Lichtleiter 1 müssen wie gesagt keinen kreisrunden Querschnitt haben. Die obige Beziehung (3) kann dabei entsprechend für die Querschnittflächen der von den Umrandungskurven vom inneren Teil 6, und der Schicht 9 formuliert werden. In diesem Fall gilt nach einer weiteren Ausführungsform

$$(4) \quad 1 - \frac{A_6}{A_9} \leq 0{,}09.$$

Dabei bezeichnet $A_6$ die von der äußeren Umrandungskurve des Querschnitts des inneren Teils 6 eingeschlossene Fläche und $A_9$ die von der äußeren Umrandungskurve des Querschnitts der Schicht 9 eingeschlossene Fläche.

Es reicht üblicherweise aus, eine Verbindung von Schlauch 3 oder Oberfläche des inneren Teils 6 zur Ummantelung 5 zu unterbinden oder aufzuheben. Dann wird ein gasgefüllter Spalt, insbesondere ein Luftspalt hinreichender Breite durch die Oberflächenrauigkeit der Oberflächen aufrechterhalten. Dies gilt auch dann, wenn der Lichtleiter gebogen wird mit nahezu beliebigen Biegeradien. Auch kann auf dem Schlauch 3 oder allgemeiner dem inneren Teil 6 eine Schlichte mit Partikeln vorhanden sein, wobei die Partikel die Ummantelung 5 und die Oberfläche des inneren Teils auseinanderhalten und einen Spalt schaffen. Bei einem gasgefüllten Spalt wird vorzugsweise ein trockenes gasförmiges Medium mit einem Taupunkt von höchstens - 20 °C verwendet, um eine Kondensation im Spalt zu vermeiden. Geeignet ist beispielsweise trockene Luft oder eine Edelgasfüllung.

Der Lichtleiter 1, wie er hier beschrieben ist, eignet sich besonders als Konturbeleuchtung oder allgemeiner als dekorative Beleuchtung und damit auch als Gestaltungselement für Innenräume von Gebäuden und Fahrzeugen. Als derartiges Gestaltungselement kann der Lichtleiter eine solche Beleuchtung in Innenräumen von Gebäuden, sowie deren Ausstattung, z.B. im Mobiliar, oder an oder bei Geräten und Maschinen sowie im Aussenbereich von Gebäuden, etwa an Fassaden, sowie zur Innen- oder Außenbeleuchtungen von Fahrzeugen eingesetzt werden. Fahrzeuge könne rad- und schienengebundene Fahrzeuge, Schiffe und Flugzeuge sein.

Insbesondere bei Fahrzeugen, wie Automobilen, Flugzeugen, Schiffen und/oder Zuegen kann der Lichtleiter als Teil von Innenverkleidungen von Fahrzeugen verwendet werden. Im Bereich der Innenausstattung kann der Lichtleiter als Teil von Möbeln, insbesondere von Fahrzeugsitzen, Wohnlandschaften und/oder Kuechen eingesetzt werden. Weitere Anwendungen sind die

- Verwendung als Bestandteil eines Scheinwerfers (40), insbesondere eines Fahrzeugscheinwerfers, die
- Beleuchtung von Landebahnen für Luftfahrzeuge, die
- Verwendung zusammen mit anderen Lichtleitern und/oder anderen seitenemittierenden Stufenindexfasern zur Bildung eines Flächengebildes, welches seinerseits einen Beleuchtungskörper bilden kann,
- die Hintergrundbeleuchtung von Displays, die
- Verwendung als Ambient- oder Abgrenzungsbeleuchtung in Fahrzeugen, Schiffen, Flugzeugen, Gebäuden, Straßen, Wegweiser, Straßenschilder, Textilien, die
- Verwendung als Sicherheitsbeleuchtung mit selbstleuchtenden phosphoreszierenden Zusatzstoffen.

Eine weitere Anwendung ist die Verwendung in oder an medizintechnischen Vorrichtungen, zum Beispiel als Akzent- oder Kontur- oder Sicherheitsbeleuchtung daran. Es ist weiter auch vorgesehen, den Lichtleiter 1 oder die Lichtquelle 2 als Vorrichtung oder zumindest als Komponente einer Vorrichtung für ein medizinisches Therapieverfahren, insbesondere für eine photodynamische Therapie (PDT) zur Tumortherapie, für eine endovenöse Lasertherapie (EVLT) zur Behandlung von Krampfadern, für eine Laser- induzierte interstitielle Thermotherapie (LITT) oder für Anwendungen im Bereich der Augenheilkunde, der Dentalmedizin, sowie der Dermatologie zu verwenden. Insbesondere bei Letzteren auch zur Unterstützung von Wundheilungen. Im Hinblick auf die Verwendung im medizintechnischen Umfeld ist es weiterhin von Vorteil, wenn der verwendete Kunststoff, die verwendeten Kunstoffe, also auch die Polymerblends bevorzugt biokompatiblen Kunststoff-Materialien umfassen, welche zum Beispiel gemäß den Normen EN ISO 10993-1:2018 beziehungsweise EN ISO 10993-5:2009 beziehungsweise USP Class VI gelistet sind. Zudem sollte das zum Einsatz kommende Material derart ausgewählt sein, dass dieses sterilisierbar, insbesondere Ethylenoxid-sterilisierbar (EO), ist, da diese Sterilisationsmethode insbesondere bei Einweg-Anwendungen (Disposable-Anwendungen oder Single-Use-Anwendungen) im medizintechnischen Bereich von Interesse ist, wie dies die ISO 11135:2014 beschreibt. Hierbei ist insbesondere auf eine Chlor-Freiheit des Materials zu achten, da ansonsten während des EO-Prozesses chlorhaltige Verbindungen entstehen können, die zum einen toxisch sein können und zum anderen nur unvollständig nach dem Sterilisationsprozess ausgetrieben werden können.

Eine Ausführungsform einer Lichtquelle 2, die unter anderem und besonders auch für medizinische Anwendungen geeignet ist, zeigt Fig. 20. Bei dieser Ausführungsform wird das Licht des Lichtemitters 4 in einen weiteren Lichtleiter 21 eingekoppelt, der optisch mit einem Ende 10 des seitenemittieren Lichtleiters 1 verbunden ist. Diese Ausführungsform ist dann besonders sinnvoll, wenn auch der weitere Lichtleiter 21 flexibel ausgebildet ist. Vorzugsweise wird hier für den seitenemittierenden Lichtleiter ein kurzer Abschnitt verwendet. So ist in Weiterbildung dieser Ausführungsform daran gedacht, Lichtleiter mit einer Länge im Bereich von 5 mm bis 50 mm einzusetzen. Der Lichtleiter 1 dient hier als Diffusor für das im Weiteren Lichtleiter 21 zugeführte Licht. Für medizinische Anwendungen kann der Diffusor an eine vorgesehene Position an oder im Körper eines zu behandelnden Patienten geführt und das Licht dort über den Lichtleiter 1 abgegeben werden. Der weitere Lichtleiter 21 kann zur optischen Kopplung an den Lichtleiter 1 angeschmolzen oder mit dem Lichtleiter 1 verklebt sein. Für hohe Lichtintensitäten bietet es sich hier generell an, einen Laser 40 als Lichtemitter 4 einzusetzen.

Ohne Beschränkung auf das spezielle dargestellte Beispiel ist zusammenfassend eine Lichtquelle 2 vorgesehen, bei welcher der seitenemittierende Lichtleiter 1 mit einem weiteren flexiblen Lichtleiter 21 verbunden ist, und wobei ein Lichtemitter 4, vorzugsweise ein Laser 40 an den weiteren flexiblen Lichtleiter 21 gekoppelt ist, so dass das Licht des Lichtemitters 4 über den weiteren Lichtleiter 21 in den seitenemittierenden Lichtleiter 1 eingekoppelt und entlang des seitenemittierenden Lichtleiters 1 abgegeben wird. Diese Lichtquelle 2 kann insbesondere für die oben genannten medizinischen Anwendungen eingesetzt werden.

Die Grundfunktion des seitenemittierenden Lichtleiters 1 wird durch die Lichtstreuung in oder am Schlauch 3 bewirkt. Neben der Streueigenschaft kann der Lichtleiter 1 aber ganz allgemein auch filternde Eigenschaften haben oder das Spektrum des abgestrahlten Lichts gegenüber dem Spektrum des eingekoppelten Lichts verändern. Auf diese Weise können eine Vielzahl von Lichteffekten erzielt werden. Gemäß einer Ausführungsform enthält der Schlauch 3 Pigmente oder andere farbige Streupartikel. Diese Streupartikel absorbieren Teile des Lichts abhängig von der Wellenlänge, so dass auch das reflektierte, beziehungsweise gestreute Licht sich spektral vom im Kern geführten Licht unterscheidet und eine Färbung verleiht bekommt. Gemäß einer weiteren alternativen oder zusätzlichen Ausführungsform ist zumindest einer der Kunststoffe von Schlauch 3 und Ummantelung 5 gefärbt. Der Farbstoff erhöht im Allgemeinen nicht die Streuung, so dass der Kunststoff transparent bleibt. Der Farbstoff gemäß dieser Ausführungsform ist also demgemäß kein Pigment. Durch die partielle spektrale Absorption des Farbstoffes wird die spektrale Verteilung des durch den Kunststoff durchgehenden Lichts geändert. Gegebenenfalls ist der Farbstoff durch das verwendete Polymer oder eine Polymerkomponente selbst gegeben, im Unterschied zur Alternative von in der Polymermatrix gelösten Farbstoffmolekülen.

Noch eine weitere Möglichkeit zur spektralen Beeinflussung des Lichts ist die Umwandlung in andere Wellenlängen, also die Konversion von Licht einer Wellenlänge in Licht zumindest einer anderen Wellenlänge mit einem geeigneten Konversionsmaterial. Dies ist von Vorteil, um für eine spektrale Änderung des abgegebenen Lichts wenig Intensität zu verlieren. Eine solche Konversion wird insbesondere erzielt, indem der Lichtleiter 1 ein photolumineszentes Material enthält. Die Photolumineszenz kann sowohl eine Fluoreszenz, als auch eine Phosphoreszenz sein. Das photolumineszente Material kann in einer oder mehreren der Komponenten des Lichtleiters 1 enthalten sein, der mit dem Licht in Berührung komme, insbesondere in Seele 3 und Ummantelung 5. Beispielsweise kann der Schlauch 3 photolumineszente Partikel 30 enthalten. So kann beispielsweise blaues Licht eingespeist und am Schlauch 3 gestreut und teilweise in gelbes Licht konvertiert werden, um durch die Mischung dieser Komponenten weißes Licht abzustrahlen. Beispielsweise kann aber auch ein photolumineszentes Material in der Ummantelung enthalten sein, um beim Durchgang des aus dem Schlauch 3 heraustretenden Lichts zumindest einen Teil der Intensität zu konvertieren. Hier werden auch die erzielbaren unterschiedlichen optischen Effekte deutlich. Bei einer gefärbten Ummantelung 5 wird der Farbeindruck des für den Betrachter hell leuchtenden Schlauchs 3 geändert. Bei einem photolumineszenten Farbstoff in der Ummantelung 5 entsteht einLichtschein um den hell leuchtenden Schlauch 3, wobei dieser Lichtschein eine andere Farbe als das vom Schlauch 3 direkt abgestrahlte Licht aufweist.

Bei Verwendung von phosphoreszierenden Zusatzstoffen kann ein Nachleuchteffekt des Lichtleiters erzeugt werden, auch wenn die Lichtquelle des Lichtleiters abgeschaltet wird. So kann eine Sicherheitsbeleuchtung erzielt werden, zum Beispiel für den Einsatz in Krankenhäusern, Fahrzeugen oder im Flugzeugbereich. Außerdem werden die phosphoreszierenden Partikel im Lichtleiter auch von äußerem Licht aufgeladen, so dass solche Lichtleiter auch als passive Sicherheitsbeleuchtung oder als passive Akzentbeleuchtung eingesetzt werden kann.

Eine Verwendung der erfindungsgemäßen Lichtleiter ist auf Grund ihrer Biegeunempfindlichkeit besonders vorteilhaft im Einsatz bei Photo-Bioreaktoren oder jeder anderen Art von photobiologischen Prozessen. Dabei können die Lichtleiter sowohl von außen an (transparenten) Reaktoren angebracht werden als auch unabhängig von der Transparenz der Reaktorwandung im Inneren von solchen Reaktoren, da die Lichtleiter flüssigkeitsundurchlässig sind und beständig sind gegen Chemikalien.

Alle vorgenannten Varianten können auch nur abschnittsweise im Lichtleiter integriert bzw. angewendet werden, während andere Abschnitte diese Funktionalitäten nicht aufweisen. Damit lassen sich eine Vielzahl von Effekten erzielen. Auch sind abschnittsweise keine seitlich lichtabstrahlenden Eigenschaften möglich, so dass verlustarm das Licht an weiter entfernte Stellen transportiert werden kann.

Generell können Strahlungsquellen für den Lichtleiter in einem Wellenlängenbereich von 150nm bis 15μm zum Einsatz kommen, ja nach verwendeten Fasermaterialien und gewünschter Anwendung. Denkbar sind dabei jede Art von Laserquellen, LEDs, Lichtbogenlampen, Glühfadenlampen oder jede andere Art von geeigneten Strahlungsquellen.

Bezugszeichenliste

| 1 | Lichtleiter |
|---|---|
| 2 | Lichtquelle |
| 3 | Schlauch |
| 4 | Lichtemitter |
| 5 | Ummantelung |
| 6 | innerer Teil von 1 |
| 7 | Faser |
| 8 | Faserbündel |
| 9 | Schicht |

(fortgesetzt)

| 10, 11 | Ende von 1 |
|---|---|
| 12 | Biegung in 1 |
| 13 | Spalt |
| 14 | Befestigungselement |
| 15 | Kanal |
| 16 | Hohlraum |
| 18 | Grenzfläche zwischen 5 und 9 |
| 19 | optischer Effektabschnitt |
| 20 | Lichtstrahl |
| 21 | weiterer Lichtleiter |
| 24 | Rippe |
| 25 | Nut |
| 27 | elektrischer Leiter |
| 28 | Bewehrungselement |
| 40 | Laser |
| 50 | Außenoberfläche von 5 |
| 70 | Fasermantel |
| 72 | Faserkern |
| 73 | Grenzfläche zwischen 70, 72 |
| 74 | Seele |
| 75 | Lichtstreuendes Element |

**Patentansprüche**

1. Seitenemittierender Lichtleiter (1), umfassend

    - zumindest eine als seitenemittierende Faser ausgebildete lichtleitende Faser (7), so dass in der Faser (7) geleitetes Licht entlang der Längsrichtung verteilt herausgestreut wird, sowie
    - einen die Faser (7) umgebenden Schlauch (3), wobei
    - der Schlauch (3) lichtstreuend und transluzent ausgebildet ist, so dass von der Faser (7) abgegebenes Licht unter Streuung den Schlauch (3) durchqueren kann, wobei
    - der Schlauch (3) von einer transparenten Ummantelung (5) umgeben ist, wobei Schlauch (3) und Ummantelung (5) aus Kunststoff gebildet sind, wobei die zumindest eine Faser (7) lose im Schlauch (3) geführt ist und die zumindest eine lichtleitende Faser (7) eine seitenemittierende Glasfaser ist,

    und wobei der Schlauch eine Wandstärke aufweist, die um mindestens einen Faktor fünf kleiner ist als der äußere Durchmesser der transparenten Ummantelung (5), wobei der Durchmesser der transparenten Ummantelung mindestens 1 Millimeter beträgt und die Wandstärke des Schlauchs geringer als 200 Mikrometer ist.

2. Seitenemittierender Lichtleiter (1) gemäß dem vorstehenden Anspruch, aufweisend wenigstens eines der folgenden Merkmale:

  - ein Faserbündel (8) ist mit mehreren lichtleitenden Fasern (7) im Schlauch (3) geführt, wobei die lichtleitenden Fasern (7) seitenemittierende Glasfasern sind, vorzugsweise ist das Faserbündel (8) lose im Schlauch (3) geführt,
  - der Durchmesser der transparenten Ummantelung beträgt mindestens 2 Millimeter.

3. Seitenemittierender Lichtleiter (1) gemäß einem der vorstehenden Ansprüche, **gekennzeichnet durch** zumindest eines der folgenden Merkmale:

  - das Verhältnis von Durchmesser der Ummantelung (5) zu Durchmesser des Schlauchs (3) beträgt mindestens 1,5/1,
  - das Verhältnis von Querschnittfläche der von der Außenkontur der Ummantelung (5) umschlossenen Querschnittfläche zur von der Außenkontur des Schlauchs (3) umschlossenen Fläche beträgt mindestens 2,25/1,
  - ein Faserbündel (8) ist mit mehreren lichtleitenden Fasern (7) im Schlauch (3) geführt und das Faserbündel (8) hat einen Durchmesser im Bereich von 0,5mm bis 5 mm, vorzugsweise im Bereich von 1 mm bis 3 mm,
  - die zumindest eine lichtleitende Faser (7) hat einen Durchmesser im Bereich von 10 bis 250 $\mu$m, vorzugsweise von 20 $\mu$m bis 100 $\mu$m, vorzugsweise von 30 $\mu$m bis 70 $\mu$m,
  - ein Faserbündel (8) ist mit mehreren lichtleitenden Fasern (7) im Schlauch (3) geführt und die Querschnittfläche des Faserbündels (8) liegt in einem Bereich von 0,19 mm$^2$ bis 19,7 mm$^2$, vorzugsweise in einem Bereich von 0,78 mm$^2$ bis 7,1 mm$^2$.

4. Seitenemittierender Lichtleiter (1) gemäß einem der vorstehenden Ansprüche, wobei die lichtleitenden Fasern (7) oder die wenigstens eine lichtleitende Faser (7) einen Faserkern (72) aufweisen/aufweist, der von einem Fasermantel (70) umgeben ist, wobei der Faserkern (72) einen höheren Brechungsindex als der Fasermantel (70) aufweist, **dadurch gekennzeichnet, dass** die lichtleitende(n) Faser(n) (7) zumindest eines der folgenden Merkmale umfassen/umfasst:

  - im Faserkern (72) in Längsrichtung der lichtleitenden Faser (7) verläuft zumindest eine lichtstreuende Seele (74),
  - an der Grenzfläche (73) zwischen Faserkern (72) und Fasermantel (70) sind lichtstreuende Elemente (75) vorhanden,
  - an der Grenzfläche (73) zwischen Faserkern (72) und Fasermantel (70) ist zumindest teil- oder abschnittsweise zumindest ein Streubereich umfassend Streuzentren vorhanden,
  - im Faserkern (72) und/oder Fasermantel (70) sind lichtstreuende Elemente verteilt.

5. Seitenemittierender Lichtleiter (1) gemäß einem der vorstehenden Ansprüche, wobei ein Faserbündel (8) mit mehreren lichtleitenden Fasern (7) im Schlauch (3) geführt ist, **dadurch gekennzeichnet, dass** der Schlauch (3) als zumindest teilweise oder zumindest abschnittweise um das Faserbündel (8) geschrumpfter Kunststoffschlauch (30) ausgebildet ist.

6. Seitenemittierender Lichtleiter (1) gemäß einem der vorstehenden Ansprüche, **dadurch gekennzeichnet, dass** der Kunststoff der Ummantelung (5) einen Polymerblend umfasst, vorzugsweise aufweisend zumindest eines der folgenden Merkmale:

  - zumindest eines der Polymere des Polymerblends ist ein aliphatisches Polyurethan,
  - zumindest eines der Polymere des Polymerblends bildet ein thermoplastisches Elastomer,
  - eines der Polymere des Polymerblends ist ein Polymethylmethacrylat,
  - eines der Polymere des Polymerblends ist ein Polycarbonat

wobei jeweils bevorzugt der Polymerblend Polymethylmethacrylat und thermoplastisches Polyurethan enthält.

7. Seitenemittierender Lichtleiter (1) gemäß einem der vorstehenden Ansprüche, **dadurch gekennzeichnet, dass** der Kunststoff der Ummantelung (5) zumindest einen Zuschlagstoff enthält, insbesondere einen UV-Stabilisator, einen Schlagzähmodifikator oder einen Flammhemmer.

8. Seitenemittierender Lichtleiter (1) gemäß einem der vorstehenden Ansprüche, **gekennzeichnet durch** zumindest eines der folgenden Merkmale:

  - die durch die Biegung des Lichtleiters (1) verursachten Lichtverluste bei einem Biegeradius des Lichtleiters (1) von 21 mm beträgt weniger als das 0,1-fache der gesamten im Lichtleiter geführten Lichtintensität pro Wicklung des Lichtleiters (1),
  - die durch die Biegung des Lichtleiters (1) verursachten Lichtverluste bei einem Biegeradius des Lichtleiters (1) von 12 mm beträgt weniger als das 0,3-fache der gesamten im Lichtleiter geführten Lichtintensität pro Wicklung des Lichtleiters (1).

9. Seitenemittierender Lichtleiter (1) gemäß einem der vorstehenden Ansprüche, **dadurch gekennzeichnet, dass** der Lichtleiter (1) eine Winkelverteilung des abgestrahlten Lichts aufweist, bei welcher für die Asymmetrie $A = (I_{45°} - I_{135°})/(I_{45°} + I_{135°})$ der Lichtintensität $I_{45°}$ des in einem Winkel von 45° zur Lichtleitungsrichtung und der Lichtintensität $I_{135°}$ des einem Winkel von 135° zur Lichtleitungsrichtung abgestrahlten Lichts gilt: $A < 0{,}1$, vorzugsweise $A < 0{,}05$.

10. Seitenemittierender Lichtleiter (1) gemäß einem der vorstehenden Ansprüche, **dadurch gekennzeichnet, dass** die Ummantelung (5) ein sich axial entlang des Lichtleiters (1) erstreckendes Befestigungselement (14) in Form einer Rippe (24) oder einer Nut (25) aufweist.

11. Seitenemittierender Lichtleiter (1) gemäß einem der vorstehenden Ansprüche, **dadurch gekennzeichnet, dass** die Ummantelung (5) zumindest einen sich in axialer Richtung erstreckenden Kanal (15), insbesondere in Form eines Hohlraums (16) aufweist.

12. Seitenemittierender Lichtleiter (1) gemäß einem der vorstehenden Ansprüche, **gekennzeichnet durch** zumindest eines der Merkmale:

  - der Lichtleiter (1) umfasst eine mit der Ummantelung (5) verbundene, insbesondere in der Ummantelung (5) eingelassenen, langgestreckten, sich entlang der Längsrichtung des Lichtleiters (1) erstreckenden optischen Effektabschnitt (19), dessen Beschaffenheit das vom Schlauch (3) abgestrahlte Licht hinsichtlich Farbe, Helligkeit oder Abstrahlrichtung beeinflusst,
  - der Lichtleiter (1) ist ausgebildet, das Spektrum des abgestrahlten Lichts gegenüber dem Spektrum des eingekoppelten Lichts zu verändern
  - der Schlauch (3) enthält Pigmente oder farbige Streupartikel,
  - zumindest einer der Kunststoffe von Kern (6) und Ummantelung (5) ist gefärbt,
  - der Lichtleiter (1) enthält ein photolumineszentes Material.

13. Seitenemittierender Lichtleiter (1) gemäß einem der vorstehenden Ansprüche, **dadurch gekennzeichnet, dass** zwischen Schlauch (3) und Ummantelung (9) ein fluidgefüllter, insbesondere gasgefüllter, Spalt vorhanden ist.

14. Seitenemittierender Lichtleiter (1), gemäß einem der vorstehenden Ansprüche, welcher einen inneren langgestreckten Teil (6) und eine den inneren Teil umgebende Ummantelung (5) aufweist, wobei im inneren Teil (6) Licht durch Einkopplung an einem der Enden (10, 11) des Lichtleiters (1) leitbar ist, welches nach und nach durch Streuung oder Brechung seitlich aus dem inneren Teil (6) durch die Ummantelung (5) hindurch nach außen gelenkt wird, so dass der innere Teil (6) durch die Ummantelung (5) hindurch betrachtet als langgestrecktes, insbesondere linien- oder fadenförmiges leuchtendes Element erscheint, wobei zwischen dem inneren Teil (6) und der Ummantelung (5) eine den inneren Teil umgebende Schicht (9) vorhanden ist, welche einen Brechungsindex aufweist, der niedriger ist, als der Brechungsindex der Ummantelung (5), wobei bevorzugt

  die Schicht (9) eine Gasschicht umfasst, wobei jeweils besonders bevorzugt

   - für das Verhältnis der Durchmesser $D_6$ des inneren Teil (6), zum Durchmesser $D_9$ der Schicht (9) gilt: $1 - \dfrac{D_6}{D_9} \leq 0{,}3$, oder

   - gilt: $1 - \dfrac{A_6}{A_9} \leq 0{,}09$, wobei $A_6$ die von der äußeren Umrandungskurve des Querschnitts des inneren Teils (6) eingeschlossene Fläche und $A_9$ die von der äußeren Umrandungskurve des Querschnitts der Schicht (9) eingeschlossene Fläche ist,

  und wobei ganz besonders bevorzugt die Grenzfläche (18) zwischen der Ummantelung (5) und der Schicht (9) eine konkave Brechfläche bildet.

15. Verfahren zur Herstellung eines seitenemittierenden Lichtleiters (1) gemäß einem der vorstehenden Ansprüche, bei welchem zumindest eine lichtleitende, seitenemittierende Faser (7) in einem lichtstreuend und transluzent ausgebildeten Schlauch (3) aus Kunststoff angeordnet wird, und wobei der Schlauch (3) mit der darin enthaltenen zumindest einen lichtleitenden Faser mit einer Ummantelung (5) aus Kunststoff umgeben wird.

16. Lichtquelle (2) mit einem Lichtleiter (1) gemäß einem der Ansprüche 1 bis 14, wobei ein Faserbündel (8) mit mehreren lichtleitenden Fasern (7) im Schlauch (3) geführt ist, sowie zumindest einem Lichtemitter (4), welcher an einem Ende (10, 11) optisch mit den Fasern (7) des Faserbündels (8) gekoppelt ist, um Licht in die lichtleitenden Fasern (7) einzukoppeln, wobei bevorzugt bei der Lichtquelle (2) der seitenemittierende Lichtleiter (1) mit einem weiteren flexiblen Lichtleiter (21) verbunden ist, und wobei ein Lichtemitter (4), vorzugsweise ein Laser (40), an den weiteren flexiblen Lichtleiter (21) gekoppelt ist, so dass das Licht des Lichtemitters (4) über den weiteren Lichtleiter (21) in den seitenemittierenden Lichtleiter (1) eingekoppelt und entlang des seitenemittierenden Lichtleiters (1) abgegeben wird.

17. Verwendung eines Lichtleiters (1) nach einem der Ansprüche 1 bis 14 oder einer Lichtquelle (2) nach Anspruch 16 als Kontur- oder Akzentbeleuchtung oder in einer medizintechnischen Vorrichtung.

**Claims**

1. A side-emitting light guide (1), comprising

    - at least one light-conducting fibre (7) in the form of a side-emitting fibre, such that light guided in the fibre (7) is scattered outward in a distributed manner along the longitudinal extension thereof, and
    - a tube (3) surrounding the fibre (7), wherein
    - the tube (3) is configured so as to be light-scattering and translucent, such that light emitted from the fibre (7) can pass through the tube (3) while being scattered, wherein
    - said tube (3) is surrounded by a transparent sheathing (5), the tube (3) and the sheathing (5) being made of plastic, wherein the at least one fibre (7) is loosely guided within the tube (3) and the at least one light-conducting fibre (7) is a side-emitting glass fibre;

    and wherein the tube has a wall thickness which is smaller by at least a factor of five than the outer diameter of the transparent sheathing (5), wherein the diameter of the transparent sheathing is at least 1 millimetre and the wall thickness of the tube is less than 200 micrometres.

2. The side-emitting light guide (1) according to the preceding claim, comprising at least one of the following features:

    - a fibre bundle (8) comprising a plurality of light-conducting fibres (7) is guided within the tube (3), wherein the light-conducting fibres (7) are side-emitting glass fibres, preferably the fibre bundle (8) is loosely guided within the tube (3);
    - the diameter of the transparent sheathing is at least 2 millimetres.

3. The side-emitting light guide (1) according to any one of the preceding claims, **characterized by** at least one of the following features:

    - the ratio of the diameter of the sheathing (5) to the diameter of the tube (3) is at least 1.5:1;
    - the ratio of cross-sectional areas of the cross-sectional area enclosed by the outer contour of the sheathing (5) to the area enclosed by the outer contour of the tube (3) is at least 2.25:1;
    - a fibre bundle (8) comprising a plurality of light-conducting fibres (7) is guided within the tube (3) and the fibre bundle (8) has a diameter in the range from 0.5 mm to 5 mm, preferably in the range from 1 mm to 3 mm;
    - the at least one light-conducting fibre (7) has a diameter in the range from 10 to 250 $\mu$m, preferably from 20 $\mu$m to 100 $\mu$m, preferably from 30 $\mu$m to 70 $\mu$m;
    - a fibre bundle (8) comprising a plurality of light-conducting fibres (7) is guided within the tube (3) and the cross-sectional area of the fibre bundle (8) is in a range from 0.19 mm$^2$ to 19.7 mm$^2$, preferably in a range from 0.78 mm$^2$ to 7.1 mm$^2$.

4. The side-emitting light guide (1) according to any one of the preceding claims, wherein the light-conducting fibres (7) or the at least one light-conducting fibre (7) comprise(s) a fibre core (72) which is surrounded by a fibre cladding (70), with the fibre core (72) having a higher refractive index than the fibre cladding (70), **characterised in that** the one or more light-conducting fibres (7) comprise at least one of the following features:

    - at least one light-scattering inner core (74) extends inside the fibre core (72) along the longitudinal extension of the light-conducting fibre (7);
    - light-scattering elements (75) are provided at the interface (73) between the fibre core (72) and the fibre cladding (70);
    - at least one scattering zone including scattering centres is provided at the interface (73) between the fibre core (72) and the fibre cladding (70), at least partially or in sections thereof;
    - light-scattering elements are distributed throughout the fibre core (72) and/or fibre cladding (70).

5. The side-emitting light guide (1) according to any one of the preceding claims, wherein a fibre bundle (8) comprising a plurality of light-conducting fibres (7) is guided within the tube (3), **characterised in that** the tube (3) is in the form of a plastic shrink tube (30) shrunk at least partially or at least in sections around the fibre bundle (8).

6. The side-emitting light guide (1) according to any one of the preceding claims, **characterised in that** the plastic of the sheathing (5) comprises a polymer blend, preferably having at least one of the following features:

- at least one of the polymers of the polymer blend is an aliphatic polyurethane;
- at least one of the polymers of the polymer blend forms a thermoplastic elastomer;
- one of the polymers of the polymer blend is a polymethyl methacrylate;
- one of the polymers of the polymer blend is a polycarbonate,

wherein, preferably, the polymer blend comprises polymethyl methacrylate and thermoplastic polyurethane in each case.

7. The side-emitting light guide (1) according to any one of the preceding claims, **characterised in that** the plastic of the sheathing (5) comprises at least one additive, in particular a UV stabilizer, an impact modifier or a flame retardant.

8. The side-emitting light guide (1) according to any one of the preceding claims, **characterized by** at least one of the following features:

- the light losses caused by a bending of the light guide (1) with a bending radius of the light guide (1) of 21 mm are less than 0.1 times the total light intensity guided within the light guide per winding of the light guide (1);
- the light losses caused by the bending of the light guide (1) with a bending radius of the light guide (1) of 12 mm are less than 0.3 times the total light intensity guided within the light guide per winding of the light guide (1).

9. The side-emitting light guide (1) according to any one of the preceding claims, **characterised in that** the light guide (1) exhibits an angular distribution of the emitted light, in which the following applies for the asymmetry $A = (I_{45°} - I_{135°})/(I_{45°} + I_{135°})$ of the light intensity $I_{45°}$ of the light emitted at an angle of 45° relative to the light guiding direction and the light intensity $I_{135°}$ of the light emitted at an angle of 135° relative to the light guiding direction: $A < 0.1$, preferably $A < 0.05$.

10. The side-emitting light guide (1) according to any one of the preceding claims, **characterised in that** the sheathing (5) has a fastening element (14) in the form of a rib (24) or a groove (25), which extends axially along the light guide (1).

11. The side-emitting light guide (1) according to any one of the preceding claims, **characterised in that** the sheathing (5) has at least one channel (15), in particular in the form of a cavity (16), which extends along the axial direction.

12. The side-emitting light guide (1) according to any one of the preceding claims, **characterized by** at least one of the features:

- the light guide (1) comprises an elongated optical effect section (19) connected to the sheathing (5), in particular embedded in the sheathing (5), which extends along the longitudinal extension of the light guide (1), the nature of which influences the light emitted from the tube (3) in terms of colour, brightness or emission direction;
- the light guide (1) is configured to change the spectrum of the emitted light compared to the spectrum of the injected light;
- the tube (3) contains pigments or coloured scattering particles;
- at least one of the plastics of the core (6) and the sheathing (5) is coloured;
- the light guide (1) contains a photoluminescent material.

13. The side-emitting light guide (1) according to any one of the preceding claims, **characterised in that** a fluid-filled, in particular gas-filled, gap is provided between the tube (3) and the sheathing (9).

14. The side-emitting light guide (1) according to any one of the preceding claims, which has an inner elongated part (6) and a sheathing (5) surrounding the inner part, wherein light is conductible in the inner part (6) by being injected at one of the ends (10, 11) of the light guide (1), said light being gradually directed laterally outward from the inner part (6) through the sheathing (5) due to scattering or refraction, so that the inner part (6), when viewed through the sheathing (5), appears as an elongated, in particular line-shaped or thread-like luminous element, wherein a layer (9) surrounding the inner part is provided between the inner part (6) and the sheathing (5), said layer having a refractive index that is lower than the refractive index of the sheathing (5), wherein preferably

the layer (9) comprises a gas layer, wherein particularly preferably the following is true in each case:

- for the ratio of the diameter $D_6$ of the inner part (6) to the diameter $D_9$ of the layer (9) the following applies: $1 - D_6/D_9 \leq 0.3$; or
- the following applies: $1 - A_6/A_9 \leq 0.09$, wherein $A_6$ is the area enclosed by the outer boundary curve of the cross-section of the inner part (6), and $A_9$ is the area enclosed by the outer boundary curve of the cross-section of the layer (9);

and wherein, most preferably, the interface (18) between the sheathing (5) and the layer (9) forms a concave refracting surface.

15. A method for producing a side-emitting light guide (1) according to any one of the preceding claims, wherein at least one light-conducting, side-emitting fibre (7) is arranged inside a light-scattering and translucent tube (3) made of plastic, and wherein the tube (3) with the at least one light-conducting fibre accommodated therein is surrounded by a sheathing (5) made of plastic.

16. A light source (2) comprising a light guide (1) according to any one of claims 1 to 14, wherein a fibre bundle (8) comprising a plurality of light-conducting fibres (7) is guided within the tube (3), and at least one light emitter (4) which is optically coupled to the fibres (7) of the fibre bundle (8) at one end (10, 11) thereof in order to inject light into the light-conducting fibres (7),

wherein preferably, in the light source (2), the side-emitting light guide (1) is connected to a further flexible light guide (21), and a light emitter (4), preferably a laser (40), is coupled to the further flexible light guide (21), such that the light of the light emitter (4) is injected into the side-emitting light guide (1) via the further light guide (21) and is emitted along the side-emitting light guide (1).

17. Use of a light guide (1) according to any one of claims 1 to 14 or of a light source (2) according to claim 16 as contour lighting or accent lighting, or in a medical technology device.

## Revendications

1. Conducteur de lumière (1) à émission latérale, comprenant

- au moins une fibre conductrice de lumière (7) réalisée sous forme de fibre à émission latérale, de sorte que la lumière guidée dans la fibre (7) est diffusée de manière répartie le long de la direction longitudinale, et
- un tube (3) entourant la fibre (7),
- le tube (3) étant réalisé de manière diffusante et translucide, de sorte que la lumière émise par la fibre (7) peut traverser le tube sous diffusion, dans lequel
- le tube (3) est entouré d'une gaine transparente (5), le tube (3) et la gaine (5) étant formés en matière plastique, ladite au moins une fibre (7) étant disposée librement dans le tube (3) et ladite au moins une fibre conductrice de lumière (7) étant une fibre en verre à émission latérale,

et dans lequel le tube présente une épaisseur de paroi qui est inférieure d'au moins un facteur cinq au diamètre extérieur de la gaine transparente (5), le diamètre de la gaine transparente étant d'au moins 1 millimètre et l'épaisseur de paroi du tube étant inférieure à 200 micromètres.

2. Conducteur de lumière (1) à émission latérale selon la revendication précédente, comprenant au moins l'une des caractéristiques suivantes:

- un faisceau de fibres (8) comportant plusieurs fibres conductrices de lumière (7) est guidé dans le tube (3), les fibres conductrices de lumière (7) étant des fibres en verre à émission latérale, de préférence le faisceau de fibres (8) est disposé librement dans le tube (3),
- le diamètre de la gaine transparente est d'au moins 2 millimètres.

3. Conducteur de lumière (1) à émission latérale selon l'une quelconque des revendications précédentes, **caractérisé par** au moins l'une des caractéristiques suivantes:

- le rapport du diamètre de la gaine (5) au diamètre du tube (3) est d'au moins 1,5:1,
- le rapport de la surface de section transversale de la surface de section transversale délimitée par le contour extérieur de la gaine (5) à la surface délimitée par le contour extérieur du tube (3) est d'au moins 2,25:1,
- un faisceau de fibres (8) comportant plusieurs fibres conductrices de lumière (7) est guidé dans le tube (3) et le faisceau de fibres (8) présente un diamètre compris entre 0,5 mm et 5 mm, de préférence compris entre 1 mm et 3 mm,
- ladite au moins une fibre conductrice de lumière (7) présente un diamètre compris entre 10 et 250 $\mu$m, de préférence entre 20 $\mu$m et 100 $\mu$m, de préférence entre 30 $\mu$m et 70 $\mu$m,
- un faisceau de fibres (8) comportant plusieurs fibres conductrices de lumière (7) est guidé dans le tube (3) et la surface de section transversale du faisceau de fibres (8) est comprise entre 0,19 mm$^2$ et 19,7 mm$^2$, de préférence entre 0,78 mm$^2$ et 7,1 mm$^2$.

4. Conducteur de lumière (1) à émission latérale selon l'une quelconque des revendications précédentes, dans lequel les fibres conductrices de lumière (7) ou ladite au moins une fibre conductrice de lumière présentent un cœur de fibre (72) entouré d'une gaine de fibre (70), le cœur de fibre (72) présentant un indice de réfraction supérieur à celui de la gaine de fibre (70),

**caractérisé en ce que** la ou les fibres conductrices de lumière (7) présentent au moins l'une des caractéristiques suivantes:

- au moins une âme diffusante de lumière (74) s'étend dans le cœur de fibre (72) dans la direction longitudinale de la fibre conductrice de lumière (7),
- des éléments diffusants de lumière (75) sont présents à l'interface (73) entre le cœur de fibre (72) et la gaine de fibre (70),
- au moins une zone de diffusion comprenant des centres de diffusion est présente à l'interface (73) entre le cœur de fibre (72) et la gaine de fibre (70), au moins partiellement ou par sections,
- des éléments diffusants de lumière sont répartis dans le cœur de fibre (72) et/ou dans la gaine de fibre (70).

5. Conducteur de lumière (1) à émission latérale selon l'une quelconque des revendications précédentes, dans lequel un faisceau de fibres (8) comportant plusieurs fibres conductrices de lumière (7) est guidé dans le tube (3), **caractérisé en ce que** le tube (3) est réalisé sous forme d'un tube en matière plastique (30) rétracté au moins partiellement ou au moins par sections autour du faisceau de fibres (8).

6. Conducteur de lumière (1) à émission latérale selon l'une quelconque des revendications précédentes,

**caractérisé en ce que** la matière plastique de la gaine (5) comprend un mélange de polymères, comprenant de préférence au moins l'une des caractéristiques suivantes:

- au moins l'un des polymères du mélange de polymères est un polyuréthane aliphatique,
- au moins l'un des polymères du mélange de polymères forme un élastomère thermoplastique,
- l'un des polymères du mélange de polymères est un polyméthacrylate de méthyle,
- l'un des polymères du mélange de polymères est un polycarbonate,

dans lequel, de préférence, le mélange de polymère contient, dans chaque cas, du polyméthacrylate de méthyle et du polyuréthane thermoplastique.

7. Conducteur de lumière (1) à émission latérale selon l'une quelconque des revendications précédentes,

**caractérisé en ce que** la matière plastique de la gaine (5) contient au moins un additif, notamment un stabilisant UV, un modificateur d'impact ou un retardateur de flamme.

8. Conducteur de lumière (1) à émission latérale selon l'une quelconque des revendications précédentes, **caractérisé par** au moins l'une des caractéristiques suivantes:

- les pertes lumineuses dues à la courbure du conducteur de lumière (1), pour un rayon de courbure de 21 mm, sont inférieures à 0,1 fois l'intensité lumineuse totale guidée dans le conducteur de lumière par enroulement du conducteur de lumière (1),
- les pertes lumineuses dues à la courbure du conducteur de lumière (1), pour un rayon de courbure de 12 mm, sont inférieures à 0,3 fois l'intensité lumineuse totale guidée dans le conducteur de lumière par enroulement du conducteur de lumière (1).

9. Conducteur de lumière (1) à émission latérale selon l'une quelconque des revendications précédentes, **caractérisé en ce que** le conducteur de lumière (1) présente une distribution angulaire de la lumière émise pour laquelle, pour l'asymétrie A = $(I_{45°} - I_{135°})/(I_{45°} + I_{135°})$ de l'intensité lumineuse $I_{45°}$ de la lumière émise à un angle de 45° par rapport à la direction de guidage de la lumière et de l'intensité lumineuse $I_{135°}$ de la lumière émise à un angle de 135° par rapport à la direction de guidage de la lumière, il s'applique: A < 0,1, de préférence A < 0,05.

10. Conducteur de lumière (1) à émission latérale selon l'une quelconque des revendications précédentes, **caractérisé en ce que** la gaine (5) présente un élément de fixation (14) sous forme d'une nervure (24) ou d'une rainure (25), qui s'étend axialement le long du conducteur de lumière (1).

11. Conducteur de lumière (1) à émission latérale selon l'une quelconque des revendications précédentes, **caractérisé en ce que** la gaine (5) présente au moins un canal (15) s'étendant dans la direction axiale, notamment sous forme d'une cavité (16).

12. Conducteur de lumière (1) à émission latérale selon l'une quelconque des revendications précédentes, **caractérisé par** au moins l'une des caractéristiques suivantes:

- le conducteur de lumière (1) comprend une section d'effet optique (19) allongée, s'étendant le long de la direction longitudinale du conducteur de lumière (1), reliée à la gaine (5), notamment insérée dans la gaine (5), dont la configuration influence la lumière émise par le tube (3) en termes de couleur, de luminosité ou de direction d'émission,

- le conducteur de lumière (1) est conçu pour modifier le spectre de la lumière émise par rapport au spectre de la lumière injectée,

- le tube (3) contient des pigments ou des particules diffusantes colorées,

- au moins l'une des matières plastiques du cœur (6) et de la gaine (5) est colorée,

- le conducteur de lumière (1) contient un matériau photoluminescent.

13. Conducteur de lumière (1) à émission latérale selon l'une quelconque des revendications précédentes, **caractérisé en ce qu'**un espace rempli d'un fluide, notamment d'un gaz, est présent entre le tube (3) et la gaine (9).

14. Conducteur de lumière (1) à émission latérale selon l'une quelconque des revendications précédentes, comprenant une partie interne allongée (6) et une gaine (5) entourant la partie interne, la lumière pouvant être guidée dans la partie interne (6) par injection à l'une des extrémités (10, 11) du conducteur de lumière (1), ladite lumière étant progressivement déviée latéralement vers l'extérieur depuis la partie interne (6) par diffusion ou réfraction à travers la gaine (5), de sorte que la partie interne (6), observée à travers la gaine (5), apparaît comme un élément lumineux allongé, notamment linéaire ou filiforme, une couche (9) entourant la partie interne étant présente entre la partie interne (6) et la gaine (5), ladite couche présentant un indice de réfraction inférieur à indice de réfraction de la gaine (5),

dans lequel, de préférence,
la couche (9) comprend une couche gazeuse,
dans lequel, de préférence particulièrement

- pour le rapport des diamètres $D_6$ de la partie interne (6) au diamètre $D_9$ de la couche (9), il s'applique: $1 - D_6/D_9 \leq 0{,}3$, ou
- il s'applique: $1 - A_6/A_9 \leq 0{,}09$, $A_6$ étant la surface délimitée par le contour extérieur de la section transversale de la partie interne (6) et $A_9$ étant la surface délimitée par le contour extérieur de la section transversale de la couche (9),

et dans lequel, de manière tout particulièrement préférée, l'interface (18) entre la gaine (5) et la couche (9) forme une surface de réfraction concave.

15. Procédé de fabrication d'un conducteur de lumière (1) à émission latérale selon l'une quelconque des revendications précédentes, dans lequel au moins une fibre conductrice de lumière (7) à émission latérale est disposée dans un tube (3) en matière plastique réalisé de manière diffusante de lumière et translucide, et dans lequel le tube (3) contenant ladite au moins une fibre conductrice de lumière est entouré d'une gaine (5) en matière plastique.

16. Source lumineuse (2) comprenant un conducteur de lumière (1) selon l'une quelconque des revendications 1 à 14, dans lequel un faisceau de fibres (8) comportant plusieurs fibres conductrices de lumière (7) est guidé dans le tube (3), et comprenant au moins un émetteur de lumière (4) optiquement couplé aux fibres (7) du faisceau de fibres (8) à une extrémité (10, 11) de celles-ci, afin d'injecter de la lumière dans les fibres conductrices de lumière (7),

de préférence dans la source lumineuse (2),
le conducteur de lumière (1) à émission latérale est relié à un autre conducteur de lumière flexible (21), et un émetteur de lumière (4), de préférence un laser (40), est couplé audit autre conducteur de lumière flexible (21), de sorte que la lumière de l'émetteur de lumière (4) est injectée via l'autre conducteur de lumière (21) dans le conducteur de lumière (1) à émission latérale et est émise le long du conducteur de lumière (1) à émission latérale.

17. Utilisation d'un conducteur de lumière (1) selon l'une quelconque des revendications 1 à 14 ou d'une source lumineuse (2) selon la revendication 16 en tant qu'éclairage de contour ou d'accentuation ou dans un dispositif de technique médicale.

Fig. 1

Fig. 2

Fig. 3

Fig. 4

Fig. 5

Fig. 6

Fig. 7

Fig. 8

Fig. 9

Fig. 10

Fig. 11

EP 3 789 666 B1

Fig. 12

Fig. 13

22

Fig. 14

(b)

(a)

45°

30°

15°

0°

-15°

-30°

-45°

Winkelabhängige Luminanz (normiert)

0,5

1,0

1,5

2,0

Fig. 20

4, 40

21

10

1

2

Fig. 15

Fig. 16

Fig. 17

(a)    1    (b)

1

5
50
6
20

D1

5
50
6

20

D2

## Fig. 18

b [mm]

1,0500
1,0499
1,0498
1,0497
1,0496
1,0495

0,00   0,02   0,04   0,06   0,08   0,10
Dicke der Luftschicht [mm]

## Fig. 19